(19) Europäisches Patentamt
European Patent Office
Office européen des brevets

(11) Veröffentlichungsnummer: **0 373 364 A2**

(12) **EUROPÄISCHE PATENTANMELDUNG**

(21) Anmeldenummer: **89120850.6**

(51) Int. Cl.[5]: **C08G 75/02**

(22) Anmeldetag: **10.11.89**

(30) Priorität: **23.11.88 DE 3839442**

(43) Veröffentlichungstag der Anmeldung:
**20.06.90 Patentblatt 90/25**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Dorf, Ernst-Ulrich, Dr.**
**Bodelschwinghstrasse 16**
**D-4150 Krefeld 1(DE)**
Erfinder: **Rüsseler, Wolfgang, Dr.**
**Waldhofstrasse 121**
**D-4150 Krefeld(DE)**
Erfinder: **Weymans, Günther, Dr.**
**Karl-Arnold-Strasse 4**
**D-5090 Leverkusen(DE)**
Erfinder: **Schmidt, Manfred, Dr.**
**Erich-Klausener-Strasse 37**
**D-4150 Krefeld(DE)**
Erfinder: **Meier, Erich, Dr.**
**Berta-von-Suttner-Strasse 19**
**D-5090 Leverkusen 1(DE)**

(54) **Fehlstrukturarmes, lineares und verzweigtes Poly-p-arylensulfid, Verfahren zu seiner Herstellung und seine Verwendung.**

(57) Die Erfindung betrifft lineare und verzweigte Poly-p-arylensulfide (PAS), vorzugsweise Poly-p-phenylensulfide (PPS), die einen extrem geringen Anteil an Fehl- bzw. Fremdstrukturen aufweisen, ein Verfahren zu deren Herstellung und ihre Verwendung zur Herstellung geformter Körper.

EP 0 373 364 A2

**Fehlstrukturarmes, lineares und verzweigtes Poly-p-arylensulfid, Verfahren zu seiner Herstellung und seine Verwendung**

Die Erfindung betrifft lineare und verzweigte Poly-p-arylensulfide (PAS), vorzugsweise Poly-p-phenylensulfide (PPS), die einen extrem geringen Anteil an Fehl- bzw. Fremdstrukturen aufweisen, ein Verfahren zu deren Herstellung und ihre Verwendung zur Herstellung geformter Körper.

Polyarylensulfide sind bekannt, z. B. US-PS 3 354 129 und EP-OS 171 021. Sie sind aufgrund ihrer thermischen und mechanischen Eigenschaften sowie ihrer guten chemischen Beständigkeit wertvolle Rohstoffe zur Herstellung von Fasern, Folien und Formkörpern. Sie finden beispielsweise Anwendung im KFZ-, Elektro- und Elektroniksektor. Sie sind flammfest, dimensionsstabil, temperaturbeständig und zeigen gute elektrische Eigenschaften.

Mögliche Ausgasungen von PAS aufgrund von Fehlstellen und/oder Verunreinigungen im Polymeren können zu inhomogenen Formkörpern und zu Korrosionsproblemen bei Verarbeitung und Anwendung führen.

PAS mit einem geringen Anteil an Verunreinigungen durch Reinigung der Polymeren herzustellen ist bekannt, z. B. EP-A 96 384, 104 560, DE-OS 3 524 471, EP-A 242 617, 265 524, JP-A 62 220 522. Jedoch werden durch diese Reinigungsmethoden nicht immer ganz befriedigende Polymere erhalten.

Es ist bekannt, daß neben Verunreinigungen im Polymeren auch Fehl- oder Fremdstrukturen in der Polymermatrix die genannten Nachteile bewirken.

Es ist bekannt, durch Variation des Herstellungsverfahrens, z. B. durch Herstellung von PAS in Abwesenheit von Luft usw., Fehlstrukturen im Polymeren zu vermindern. Auch die Zugabe von anorganischen oder organischen Salzen zum Umsetzungsgemisch (z. B. DE-OS 2 623 362, 2 623 363) ist empfohlen worden. Verbesserte Produkte wurden z.B. durch Zusatz von Estern, Anhydriden, Aminosäuren oder Lactamen erhalten (z.B. EP-OS 171 021).
Die aus der EP-A 171 021 bekannten, verbesserten Polyarylensulfide zeigen ein bestimmtes vorteilhaftes rheologisches Verhalten.

Durch diese bekannten Maßnahmen können zwar gut verwendbare Polymere hergestellt werden, aber Fehl- oder Fremd strukturen im Polymeren können auf diese Weise nicht vermieden werden.

Die Fehlstrukturen des Polymeren können allein oder in Verbindung mit Verunreinigungen im Polymeren bei thermischer Beanspruchung (z. B. unter Bedingungen in der Verarbeitung und Herstellung von Formkörpern) makroskopische Schädigungen bewirken.

Teilkristalline Thermoplaste, die einen großen Teil ihrer wünschenswerten Eigenschaften aus der Ordnungsstruktur ihres kristallinen Gefüges gewinnen, können außerdem durch Störungen der Einheitlichkeit in Eigenschaften wie Kristallisationsgrad, -geschwindigkeit, -morphologie und Schmelzverhalten beeinflußt werden.

Die aus der EP-A 171 021 bekannten, verbesserten Polyarylensulfide zeigen ein bestimmtes vorteilhaftes rheologisches Verhalten.

Es wurden nun lineare und verzweigte Poly-p-arylensulfide, vorzugsweise Poly-p-phenylensulfide, die das bekannte vorteilhafte rheologische Verhalten zeigen, gefunden, die sehr wenig Fehlstrukturen aufweisen.

Der Gegenstand der Erfindung sind lineare und verzweigte Poly-p-arylensulfide, vorzugsweise Poly-p-phenylensulfide
dadurch gekennzeichnet, daß sie im XANES-Spektrum an der K-Kante des Schwefelatoms (gemessen in Transmission bei einer Genauigkeit der Energiebestimmung (relativ und absolut) von mindestens ± 0,1 eV)) im Energiebereich zwischen 2470 und 2490 eV zwei Absorptionsmaxima haben, jeweils

a) eines im Energiebereich von 2470 bis 2475,5 eV, bevorzugt von 2473 bis 2475 eV, besonders bevorzugt von 2473.5 bis 2474.1 eV

und

b) eines im Energiebereich von 2475,5 bis 2490 eV, bevorzugt von 2478 bis 2482 eV, besonders bevorzugt von 2480.8 bis 2481.4 eV, und
das Absorptionsmaximum höchster Intensität im Energiebereich a) liegt
und
das Absorptionsmaximum im Energiebereich b) höchstens 85%, bevorzugt höchstens 80%, besonders bevorzugt höchstens 73% der Intensität des Absorptionsmaximums im Energiebereich a) hat.

Die erfindungsgemäßen Poly-p-arylensulfide, vorzugsweise Poly-p-phenylensulfide, enthalten überwiegend Strukturelemente der Formel (I)

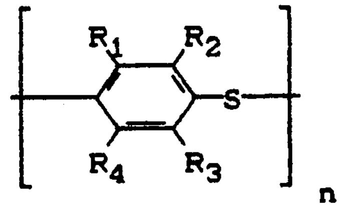

(I),

in welcher
$R_1$, $R_2$, $R_3$ und $R_4$ gleich oder verschieden sein können und für Wasserstoff (H), $C_1$-$C_{12}$ Alkyl, $C_4$-$C_{16}$ Cycloalkyl, $C_6$-$C_{20}$ Aryl, $C_7$-$C_{30}$ Alkaryl und/oder-Aralkyl stehen.

Bevorzugte erfindungsgemäße lineare und verzweigte Polyarylensulfide, vorzugsweise Polyphenylensulfide, sind dadurch gekennzeichnet, daß zusätzlich die Schmelzviskosität $\eta_m$ von 20 bis 500.000 Pa.s und das Gewichtsmittel des relativen Molekulargewichtes $M_w$ (rel) von 25.000 bis 380.000, sich vorzugsweise verhalten wie
$\lg \eta_m = 3.48 \cdot \lg M_w (rel) - 14.25 \pm 0{,}1$,
besonders bevorzugt wie
$\lg \eta_m = 3.48 \cdot \lg M_w (rel) - 14.25 \pm 0{,}05$.

Bei den erfindungsgemäßen Polyarylensulfiden zeigen die Absorptionskurven der XANES-Spektren zu den Energiebereichen a) und b) praktisch keine signifikanten Nebenabsorptionsschulter auf der Hoch- oder Niederenergieflanke des jeweiligen Absorptionsmaximums.

Gegenstand der Erfindung ist weiterhin ein Verfahren A) zur Herstellung der linearen und verzweigten Poly-p-arylensulfide, vorzugsweise linearen und verzweigten Poly-p-phenylensulfide in an sich bekannter Weise aus Dihalogenaromaten der Formel (II)

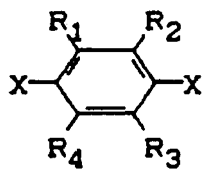

(II),

in welcher
$R^1$ bis $R^4$ die gleiche Bedeutung haben, wie bei Formel (I) angegeben,
X für Halogen (z.B. Chlor oder Brom) steht, und
0 bis 5 Mol.-%, bevorzugt 0 bis 1,25 Mol.%, bezogen auf die Summe der Dihalogenaromaten der Formel (II), eines Tri- oder Tetrahalogenaromaten der Formel (III)
$ArX_n$ (III),
in welcher
Ar ein aromatischer oder heterocyclischer $C_6$-$C_{30}$-Rest ist, bei dem bis zu drei Ring-C-Atome durch Heteroatome wie N, O, S ersetzt sein können,
X für Halogen wie Brom oder Chlor steht und
n für die Zahlen 3 oder 4 steht,
und
0 bis 12 Mol.%, bezogen auf die Summe der Dihalogenaromaten der Formel (II), von Molekulargewichtsreglern,
und
einem Schwefelspender,
dadurch gekennzeichnet, daß

(I) die Reaktion unter Schutzgasatmosphäre, bevorzugt Stickstoff, abläuft,

(II) die Umsetzung durch Vermischen von wasserhaltigen Schwefelspendern mit Lösungen der Dihalogenaromaten in einem organischen Lösungsmittel, gegebenenfalls in Gegenwart von bekannten Hilfsstoffen und/oder Katalysatoren, bei Temperaturen oberhalb 212 °C erfolgt, wobei gleichzeitig eine spontane Entwässerung eintritt und der Wassergehalt der Reaktionslösung 0 bis 0.02 Gew.-% Wasser nicht überschreitet,

(III) als wasserhaltige Schwefelspender ein Gemisch von Alkalisulfid und Alkalihydrogensulfid verwendet wird, wobei pro Mol Alkalisulfid 0,01 bis 1 Mol Alkalihydrogensulfid eingesetzt wird,

(IV) nach Dosierung des Schwefelspenders ein Überschuß an Dihalogenaromat, vorzugsweise ein

Überschuß von mindestens 0.1 Mol pro Mol Schwefelspender vorliegen muß, der während des Reaktionsverlaufs kontinuierlich auf einen Endwert in Höhe von 0 bis 0,3 Mol.-% Dihalogenaromatenüberschuß durch destillative Abtrennung vermindert wird.

Gegenstand der Erfindung ist ein weiteres Verfahren B) zur Herstellung der Poly-p-arylensulfide, vorzugsweise der linearen Poly-p-phenylsulfide in an sich bekannter Weise aus Dihalogenaromaten der Formel (II)

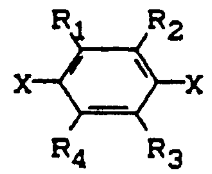

(II),

in welcher

$R^1$ bis $R^4$ die bei Formel (I) angebenene Bedeutung haben und

X für Halogen wie Chlor oder Brom steht,

und einem Schwefelspender, dadurch gekennzeichnet, daß die Reaktion unter Schutzgasatmosphäre abläuft, die Umsetzung durch Vermischen von wasserhaltigen Schwefelspendern mit Lösungen der Dihalogenaromaten in einem organischen Lösungsmittel, gegebenenfalls in Gegenwart von bekannten Hilfsstoffen und/oder Katalysatoren, bei Temperaturen oberhalb 212 C erfolgt, wobei gleichzeitig eine spontane Entwässerung eintritt und der Wassergehalt der Reaktionslösung 0 bis 0,02 Gew.-% Wasser nicht überschreitet, als wasserhaltige Schwefelspender ein Gemisch von Alkalisulfid und Alkalihydrogensulfid wobei pro Mol Alkalisulfid 0.01 bis 0.5 Mol Alkalihydrogensulfid eingesetzt wird, nach Dosierung des Schwefelspenders ein Überschuß an Dihalogenaromat,vorzugsweise ein Überschuß von mindestens 0.1 Mol Dihalogenaromat pro Mol Schwefelspender vorliegt, der während des Reaktionsverlaufs kontinuierlich auf einen Endwert in Höhe von 0 bis 0.3 Mol-% Dihalogenaromatenüberschuß durch destillative Abtrennung vermindert wird.

Die erfindungsgemäßen linearen und verzweigten Poly-p-arylensulfide, vorzugsweise Poly-p-phenylensulfide sind ohne Curing verwendbar.

Erfindungsgemäß verwendbare Dichloraromaten der Formel (II) für Verfahren A) und B) sind beispielsweise 1,4-Dichlorbenzol, 1,4-Dibrombenzol, 1-Brom-4-Chlorbenzol, 2,5-Dichlortoluol, 2,5-Dibromtoluol, 2-Chlor-5-Bromtoluol, 2,5-Dichlor-para-xylol,2,5-Dichlor-meta-xylol, 3,6-Dichlor-ortho-xylol.

Als Alkalisulfide für Verfahren A) und B) sind bevorzugt Natrium- oder Kaliumsulfid geeignet. Es können Sulfide eingesetzt werden, die aus den Hydrogensulfiden mit Natrium- oder Kaliumhydroxid hergestellt werden. Sie enthalten 1 bis 9 Mol Wasser pro Mol Sulfid. Sie können als Schmelze eingesetzt werden.

Als Hydrogensulfide für Verfahren A) und B) sind bevorzugt Natrium- oder Kaliumhydrogensulfid geeignet. Sie können aus Hydroxiden und Schwefelwasserstoff hergestellt werden. Ebenso ist es möglich, sie aus Sulfiden mit Schwefelwasserstoff herzustellen. Sie können 1 bis 9 Mol Wasser enthalten.

Erfindungsgemäß geeignete organische Lösungsmittel für Verfahren A) und B) sind aprotische Lösungsmittel, insbesondere N-alkylierte Lactame, beispielsweise N-Ethylpyrrolidon, N-Methylpiperidon, N-Isopropyl-pyrrolidon, N-Methylcaprolactam, N-Ethylcaprolactam, Harnstoffe, z.B. disubstituierte cyclische Harnstoffe, wie N,N′-Dimethyl-N,N′-ethylenharnstoff, N,N′-Dimethyl N,N′-propylen-harnstoff.

Der Siedepunkt der Lösungsmittel beträgt 212 bis 280° C. Gegebenenfalls kann zur Erzielung der Reaktionstempe ratur die Reaktion unter geringfügigem Überdruck bis zu 10 bar durchgeführt werden.

Die Umsetzung wird erfindungsgemäß bei Verfahren A) und B) unter Inertgas ausgeführt. Als Inertgas können z.B. $N_2$, Edelgase wie Ar usw. verwendet werden.

In einer besonderen Ausführungsform können alle bei dem Umsetzungen verwendeten Ausgangsstoffe, Lösemittel und Hilfsstoffe sowie Apparaturen mit Inertgas vorbehandelt werden und von reaktiven Gasen, z.B. Luft, befreit werden.

Als Molekulargewichtsregler können bekannte Stoffe eingesetzt werden, z.B. Monochloraromaten wie Chlorbenzol, Phenol(e), Phenolate, Thiophenol(e), Thiophenolat(e) usw.

Beispiele für erfindungsgemäß einsetzbare Verzweiger der Formel (III) sind 1,2,4-Trichlorbenzol, 1,3,5-Trichlorbenzol, 1,3,5-Tribrombenzol, 1,3,5-Tris(4,chlorphenyl)benzol, 1,3,5-Tris(4-bromphenyl)benzol, 2,2′, 4,4′-Tetrachlordiphenyl, 2,2′,4,4′-Tetrachlordiphenylsulfid etc..

Die Verfahren A) und B) werden so durchgeführt, daß das Lösungsmittel, die Halogenaromaten der Formel (II) gegebenenfalls mit Hilfsstoffen sowie die wasserhaltigen Hydrogensulfide und/oder Sulfide gleichzeitig oder nacheinander der Reaktionsmischung zugeführt werden. Hierbei unterschreitet die Temperatur des Reaktionsgemisches nicht 212°C. Eine Entwässerung erfolgt spontan unter Rückführung der azeotrop abdestillierenden Halogenaromaten der Formel (II). Der Wassergehalt des Reaktionsgemisches ist kleiner als 0,02 Gew.-%. (bezogen auf Halogenaromat).

Die Reaktionszeit kann innerhalb einer weiten Spanne variiert werden. Sie kann von weniger als einer Stunde bis zu mehreren Tagen, vorzugsweise von 1 Stunde bis zu 48 Stunden, besonders bevorzugt 2 bis 18 Stunden, betragen.

Nach Ende der Dosierung der wässrigen Sulfid- und Hydrogensulfid-Lösung wird die Reaktionstemperatur kontinuierlich bis auf maximal 250°C erhöht. Der eingestellte Überschuß des Dihalogenaromaten wird während der Umsetzung destillativ abgetrennt. Beispielsweise werden bei einer Gesamtreaktionszeit von 10 Stunden nach 5 Stunden bis zu 40 % des Dihalogenaromatenüberschusses, nach weiteren 3 Stunden bis zu 80 % des Dihalogenaromatenüberschusses und nach weiteren 2 Stunden bis zu 100 % des Dihalogenaromatenüberschusses aus dem Reaktionsgemisch entfernt. Falls der Reaktion durch Ausgasung, z.B. von Schwefelwasserstoff Schwefel entzogen wird, sollte das z.B. zur Berechnung der Stöchiometrie berücksichtigt werden. Der entweichende Schwefelwasserstoff kann beispielsweise zur Herstellung von Alkalisulfid zurückgeführt werden.

Die Isolierung der Polyarylensulfide erfolgt in bekannter Weise, beispielsweise durch Abkühlen, Filtern und Waschen des Reaktionsgemisches zunächst mit Ketonen wie Aceton usw. oder Alkoholen wie Methanol, Ethanol, Isopropanol etc. Der verbleibende Rückstand wird in Wasser im Verhältnis 1 Teil Rückstand zu 5 bis 20 Teilen Wasser suspendiert, die Suspension mit Säuren wie Essigsäure, Salzsäure, Phosphorsäure, Schwefelsäure etc. auf pH 1 bis 5 gestellt und anschließend mit Wasser neutral gewaschen. Die so erhaltenen hochmolekularen Polyarylensulfide besitzen eine hohe chemische Einheitlichkeit.

Die Bestimmung der Schmelzviskositäten ($\eta_m$) und des Gewichtsmittels des relativen Molekulargewichts $M_w$ (rel) der erfindungsgemäßen Polymeren als Maß für das Molekulargewicht kann z. B. nach der in EP-A 142 024, EP-A 171 021 und in der DE-A 3 622 194 beschriebenen Methode erfolgen.

Zum Nachweis der chemischen Einheitlichkeit der erfindungsgemäßen Poly-p-arylensulfide wurden die XANES-Spektren der nach Beispiel 1 und Beispiel 2 beschriebenen Poly-p-arylensulfide untersucht. Im Energiebereich zwischen 2470 eV und 2490 eV haben sie nur zwei Absorptionsmaxima (vgl. Tabelle III).

Die erfindungsgemäßen linearen und verzweigten Poly-p-arylensulfide haben - wie die Modellverbindung ohne Fremd- und Fehlstrukturen - nur 2 Absorptionsmaxima im XANES-Spektrum. Zum Nachweis, daß die Polymeren ohne Fehlstrukturen sind, sollte auch die Energielage der Absorptionsmaxima bei der K-Kante des Schwefels berücksichtigt werden.

Durch Differenzbildung der auf die Absorptionslinie höchster Intensität im Energiebereich zwischen 2470 und 2490 eV normierten Spektren kann man ermitteln, ob ein XANES-Spektrum Hinweise auf Fehlstrukturen im Polymeren enthält oder nicht. Dazu geht man folgendermaßen vor: Man subtrahiert das normierte XANES-Spektrum der auf die Fehlstrukturen zu untersuchenden Substanz von dem normierten Spektrum der Fehlstruktur-freien Substanz. Bei der möglichen apparativen Auflösung von ± 0,1 eV sind diese Differenzspektren signifikante Indikatoren für fehlstrukturenarme Polyarylensulfide.

Durch Vergleich der Spektren der Abbildungen 1 mit denen der erfindungsgemäßen Beispiele anhand der Energielagen (Tabelle I und III) wird gezeigt, daß die erfindungsgemäßen Polymeren ohne nachweisbare Fehlstrukturen sind.

Die erfindungsgemäßen linearen und verzweigten Poly-p-arylensulfide sind neu. Das XANES-Spektrum der neuen Poly-p-arylensulfide ist von den XANES-Spektren der bekannten Polyarylensulfide verschieden.

Von den nicht erfindungsgemäßen Beispielen der Tabelle IV wurden dazu XANES-Spektren aufgenommen und auf die weiße Linie normiert. Diese normierten Spektren wurden von dem Spektrum des erfindungsgemäßen Beispiel 1 subtrahiert. Die Differenzspektren sind in den Abbildungen 4 (a bis g) wiedergegeben.

Da sich die Spektren der Beispiel 1 und 2 nur marginal unterscheiden, erhält man praktisch gleiche Differenzspektren, wenn man die Differenz der nichterfindungsgemäßen Polyarylensulfide zu Beispiel 2 bildet. Die negative Differenz im Energiebereich zwischen 2470 und 2474 eV zeigt, daß die nicht erfindungsgemäßen Polyarylensulfide Nebenstrukturen auf der Niederenergieflanke der weißen Linie haben. Sie sind als Nebenmaxima neben der Absorptionslinie größter Intensität erkennbar. Positive und/oder negative Differenzen oberhalb 2474 eV zeigen eine Verschiebung der Energielage der weißen Linie, eine Änderung der Absorptionsbreite und weitere Absorptions-Nebenmaxima oberhalb 2474 eV an. Polyarylen sulfide, die solche Differenzen zu den erfindungsgemäßen Poly-p-arylensulfiden haben, enthalten Fehlstrukturen oder Fremdstrukturen.

Die neuen Polyarylensulfide haben bei einer Verarbeitung, z.B. durch Spritzguß bei erhöhter Temperatur, praktisch keine störenden Ausgasungen. Sie können daher z. B. ohne aufwendige Arbeitsschutzmaßnahmen (Geruch!) verarbeitet werden. Weiterhin eignen sie sich z.B. zur Herstellung kompliziert geformter

Spritzgußkörper, ohne das z.B. hochglanzpolierte Oberflächen der Spritzgußform auch bei langen Standzeiten angegriffen werden (Zykluszahl).

Die erfindungsgemäßen Polymeren können in bekannter Weise zur Herstellung geformter Körper, beispielsweise (Blas-) Extrudate, zur Herstellung von Fasern, Folien, Rohren, Profilen, Spritzgußteilen, Bauteilen für die Elektro- und Elektronikindustrie usw. verwendet werden.

Die Polymeren können gegebenenfalls mit üblichen Füll-und Verstärkungsstoffen, anderen Polymeren und Additiven nach bekannten Verfahren abgemischt werden.

Sie können in bekannter Weise Verwendung finden, z. B. als Automobilteile, Armaturen, Ventile, Kugellagerteile, Elektroteile, wie z. B. Schalter, elektronische Tafeln, chemikalienresistente und verwitterungsstabile Teile und Apparate, wie Pumpengehäuse und Pumpenflügelräder, Ätzbadschalen, Dichtungsringe, Teile von Büromaschinen, Fernmeldeeinrichtungen, Haushaltsgeräten, usw.

Beispiel 1 A

Herstellung von verzweigtem Poly-p-phenylensulfid nach Verfahren A

In einem 5-Liter-Kessel werden unter Stickstoff 2700 g N-Methylcaprolactam, 584,0 g 1,4-Dichlorbenzol und 51,1 g 1,3,5-Tris(4-chlorphenyl)benzol vorgelegt und auf 215 °C erwärmt. Innerhalb von 4 Stunden wird eine Lösung von 600,3 g Natriumsulfid, 69,9 g Natriumhydrogensulfid, 191,2 g Natriumaminocapronat, 158,0 g Natriumphenolat und 752 g Wasser zudosiert. Gleichzeitig werden kontinuierlich weitere 892,8 g 1,4-Dichlorbenzol zugegeben. Während der Zugabe aus beiden Zuläufen wird unter Rühren bei einer Reaktionstemperatur von 213 bis 217 °C azeotrop entwässert, wobei das mit dem Wasser abdestillierte 1,4-Dichlorbenzol kontinuierlich in den Reaktor zugeführt wird. Nach der Dosierung des Schwefelspenders wird die Temperatur erhöht. Dann wird weitere 10 Stunden unter Rückfluß erhitzt (Endtemperatur 241 °C). Über einen Destillatteiler werden dabei ständig geringe Mengen Destillat entnommen. Nach 10 Stunden lag eine Gesamt-Destillatmenge von 247,9 g 1,4-Dichlorbenzol und 354,3 g N-Methyl-caprolactam vor. Zur Erhaltung des Flüssigkeitsspiegels wurde der Flüssigkeitsverlust durch Zugabe von 500 ml N-Methylcaprolactam ausgeglichen. Während der Zeit der Reaktion ist eine Menge von 20,8 g Schwefelwasserstoff dem Reaktionssystem entwichen. Man fällt das Reaktionsgemisch in 7000 g Isopropanol unter Rühren, filtriert Salz und Polymer ab, wäscht mit 3000 g Isopropanol nach, suspendiert den Rückstand in 3000 g Wasser und säuert diese Suspension mit konzentrierter Salzsäure auf pH = 2 an. Das Polymere wird dann abfiltriert, mit Wasser gewaschen, und im Vakuum bei 100 °C getrocknet. Man erhält 886,3 g (= 89,7 %) eines Polymeren mit einer Schmelzviskosität von 980 Pa.s (T = 306 °C, Scherrate = 100 Pa); $M_w$ (rel) = 64.137. Bestimmung der chemischen Einheitlichkeit vgl. Tabelle III und V.

Vergleichsbeispiel 1 A

Herstellung von Polyphenylensulfid gemäß US-PS 3 345 129 mit Verzweigerzusatz

In einem mit Rührer ausgerüsteten Autoklaven wurden 129 g Natriumsulfidtrihydrat (= 1 Mol Natriumsulfid) und 300 g N-Methylpyrrolidon zusammengegeben. Das Gemisch wurde mit Stickstoff gespült und langsam bis auf 202 °C erwärmt. Dabei destillieren insgesamt 19 ml Wasser ab (daraus errechnet sich der Restwassergehalt von 1.78 Mol bezogen auf Natriumsulfid in der Reaktionslösung). Der Ansatz wurde anschließend auf ca. 160 °C abgekühlt und 147 g 1,4-Dichlorbenzol (= 1 Mol) und 1,81 g 1,2,4-Trichlorbenzol (1 Mol.-%) in ca. 50 g Methylpyrrolidon hinzugefügt. Man erwärmt das Reaktionsgemisch unter einem Stickstoffvordruck von 2.5 bar in 30 Minuten auf 245 °C und hält diese Temperatur 3 Stunden. Dabei wird ein Enddruck von 14.5 bar erreicht. Nach Abkühlen auf Raumtemperatur wird ein grauer Feststoff isoliert, der anschließend mit Wasser gewaschen wird. Man trocknet bei 80 °C im Vakuum und erhält 100,3 g (= 93 %) Poly-p-phenylensulfid mit hellbrauner Farbe und folgenden Kenndaten: Schmelzviskosität von 20 Pa.s (T = 306 °C, D = 100 Pa). Eine thermoplastische Verarbeitung ist ohne Härtung nicht möglich. Bestimmung der chemischen Einheitlichkeit vgl. Tabelle IV und V.

Vergleichsbeispiel 2 A:

Herstellung von verzweigtem Polyphenylensulfid gemäß EP-PS 142 024 (Beispiel 2)

In einem 2-Liter-Dreihalskolben, der mit Thermometer, Rührer, kühlbarer Kolonne, Destillatteiler und Rückflußkühler ausgerüstet ist, werden unter Stickstoff 1110 g N-Methylcaprolactam, 30,3 g N,N-Dimethylacetamid, 341,1 g 1,4-Dichlorbenzol (= 2,23 Mol) und 2.73 g 1,2,4-Trichlorbenzol (0.65 Mol-% bezogen auf 1,4-Dichlorbenzol) vorgelegt und auf 190°C bis 200°C erwärmt. Dazu wird eine Lösung von 180.9 g Natriumsulfid (= 2.32 Mol S-Spender) und Natriumhydroxid in insgesamt 250 ml Wasser (einschließlich Hydratwasser) so zugetropft, daß das zugeführte Wasser nahezu gleichzeitig azeotrop mit 1,4-Dichlorbenzol abdestillieren kann. Zur Erhaltung der Stöchiometrie wird abdestilliertes 1,4-Dichlorbenzol nach Abtrennung des Wassers wieder in den Ansatz zurückgeführt. Nach beendeter Zugabe und beendeter Entwässerung wird die Kolonne auf Kühlung gestellt, der Ansatz 10 Stunden zum Rückfluß erhitzt und das Produkt anschließend in üblicher Weise isoliert. Man erhält 225.9 g weißes Polyarylensulfid (90.2 % Ausbeute bezogen auf 1,4-Dichlorbenzol), Schmelzviskosität von 120 Pa.s (T = 306°C, D = 1000/sec). Bestimmung der chemischen Einheitlichkeit vgl. Tabelle IV und V.

<u>Vergleichsbeispiel 3 A:</u>

Herstellung von verzweigtem Polyphenylensulfid nach US-PS 4 286 018, Beispiel 10

<u>Einwaage:</u>

1,02 Mol 1,4-Dichlorbenzol,
1,00 Mol $Na_2S \cdot 9\ H_2O$,
0,90 Mol Li(OAc) $\cdot$ 2 $H_2O$,
0,14 Mol NaOH,
0,005 Mol 1,3,5-Tris(4-chlorphenyl)benzol,
4,00 ml N-Methylpyrrolidon,
Durchführung: wie Vergleichsbeispiel 1 A, jedoch wird die Reaktion 6 Stunden bei 270°C gehalten.

Es wurden 98,5 g (= 91,2 %) Polymer einer Schmelzviskosität von 390 Pa.s (T = 306°C, D = 100 Pa) erhalten.

Bestimmung der chemischen Einheitlichkeit vgl. Tabelle IV und V.

<u>Beispiel 1B</u>

Herstellung von linearem Poly-p-phenylensulfid nach Verfahren B

In einem 5 Liter-Kessel werden unter Stickstoff 2700 g N-Methylcaprolactam und 611,5 g 1,4-Dichlorbenzol vorgelegt und auf 215°C erwärmt. Innerhalb von 4 Stunden wird eine Lösung von 600,3 g Natriumsulfid, 69,9 g Natriumhydrogensulfid, 191,2 g Natriumaminocapronat und 752 g Wasser zudosiert. Gleichzeitig werden kontinuierlich weitere 856,1 g 1,4-Dichlorbenzol zugegeben. Während der Zugabe aus beiden Zuläufen wird unter Rühren bei einer Reaktionstemperatur von 213 bis 217°C azeotrop entwässert, wobei das mit dem Wasser abdestilierende 1,4-Dichlorbenzol kontinuierlich in den Reaktor zurückgeführt wird. Nach der Dosierung des Schwefelspenders wird die Temperatur erhöht. Dann wird weitere 10 Stunden unter Rückfluß erhitzt (Endtemperatur 241°C). Über einen Destillatteiler werden dabei ständig geringe Mengen Destillat entnommen. Nach 10 Stunden lag eine Gesamt-Destillatmenge von 247.1 g 1,4-Dichlorbenzol und 311,7 g N-Methyl-caprolactam vor. Zur Erhaltung des Flüssigkeitsspiegels wurde der Flüssigkeitsverlust durch Zugabe von 500 ml N-Methylcaprolactam ausgeglichen. Während der Zeit der Reaktion ist eine Menge von 22,5 g Schwefelwasserstoff dem Reaktionssystem entwichen. Man fällt das Reaktionsgemisch in 7000 g Isopropanol unter Rühren, filtriert Salz und Polymer ab, wäscht mit 3000 g Isopropanol nach, suspendiert den Rückstand in 3000 g Wasser und säuert diese Suspension mit konzentrierter Salzsäure auf pH = 2 an. Das Polymere wird dann abfiltriert, mit Wasser gewaschen und im Vakuum bei 100°C getrocknet. Man erhält 824 g (= 91.7 %) eines Polymeren mit einer Schmelzviskosität von 274 Pa.s (T = 306°C und Schergeschwindigkeit D = 1000/sec); Gewichtsmittel von $M_w$(rel) = 61082. Bestimmung

der chemischen Einheitlichkeit vgl. Tabelle III und V.

Beispiel 2 B

In einem 4 Liter-Kessel werden unter 50 mbar Stickstoff-Überdruck 1340.2 g N-Methylcaprolactam und 360.15 g 1,4-Dichlorbenzol vorgelegt und auf 215 °C erwärmt. Innerhalb von 4 Stunden wird eine Lösung von 215.3 g Natriumsulfid und 80.6 g Natriumhydrogensulfid in 321.4 g Wasser unter Rühren und spontaner azeotroper Entwässerung bei einer Reaktionstemperatur von 218 bis 222 °C eindosiert, wobei das mit dem Wasser abdestilllerende 1,4-Dichlorbenzol kontinuierlich in das Reaktionsgemisch rückgeführt wird und 3 Stunden nach Dosierbeginn gleichzeitig 205.8 g 1,4-Dichlorbenzol mit der Natriumsulfid/-hydrogensulfidlösung eingetragen werden. Proben des Reaktionsgemischs werden nach 1,2,3,4 Stunden im trockenen Methylenchlorid gelöst und der Wassergehalt bestimmt. Der Wassergehalt ist in allen Proben höchstens 0,01 Gew.-%. Die Temperatur des Reaktionsgemisches wird innerhalb von 30 Minuten auf 230 °C erhöht, weitere 8 Stunden unter Rückflußsieden erhitzt, wobei insgesamt 211 ml N-Methyl-caprolactam und 51.5 g 1,4-Dichlorbenzol abdestilliert werden. Die Endtemperatur des Reaktionsgemisches beträgt 242 °C. Die insgesamt entwichene Menge an Schwefelwasserstoff betrug 24,1 g. Man isoliert das Polymer analog der in Beispiel 1 beschriebenen Probe und erhält 349.2 g (= 92.4 %) Polymer einer Schmelzviskosität von 202 Pa.s (T = 306 °C, Schergeschwindigkeit d = 1000/sec) und einem Gewichtsmittel von $M_w$(rel) = 57519. Bestimmung der chemischen Einheitlichkeit vgl. Tabelle III und V.

Vergleichsbeispiel 1 B:

Herstellung von linearem Polyphenylensulfid gemäß US-PS 3 354 129

In einem mit Rührer ausgerüsteten Autoklaven wurden 129 g Natriumsulfidtrihydrat (= 1 Mol Natriumsulfid) und 300 g M-Methylpyrrolidon zusammengegeben. Das Gemisch wurde mit Stickstoff gespült und langsam bis auf 202 °C erwärmt. Dabei destillierten insgesamt 10 ml Wasser ab (daraus errechnet sich der Restwassergehalt von 1,78 Mol bezogen auf Natriumsulfid in der Reaktionslösung). Der Ansatz wurde anschließend auf ca. 160 °C abgekühlt und 147 g 1,4-Dichlorbenzol (= 1 Mol) in ca. 50 g Methylpyrrolidon hinzugefügt. Man erwärmt das Reaktionsgemisch unter einem Stickstoffvordruck von 2,5 bar in 30 Minuten auf 245 °C und hält diese Temperatur 3 Stunden. Dabei wird ein Enddruck von 14,5 bar erreicht. Nach Abkühlen auf Raumtemperatur wird ein grauer Feststoff isoliert, der anschließend mit Wasser gewaschen wird. Man trocknet bei 80 °C im Vakuum und erhält 100,3 g (= 93 %) Poly-p-phenylensulfid mit hellbrauner Farbe und folgenden Kenndaten: Schmelzviskosität von 4,5 Pa.s (T = 306 °C, D = 1000/sec.).

Eine thermoplastische Verarbeitung ist ohne Härtung nicht möglich. Bestimmung der chemischen Einheitlichkeit vgl. Tabelle IV und V.

Vergleichsbeispiel 2 B:

Herstellung von linearem Polyphenylensulfid nach Beispiel 1 von Seite 71 aus EP-A 171 021

In einem 2-l-Dreihalskolben, der mit Thermometer, Rührer und Kolonne mit Destillatteiler ausgerüstet ist, werden unter Stickstoff 1.110 g N-Methylcaprolactam, 323,5 g Natriumsulfidhydrat (= 2,45 mol $Na_2S$), 2,4 g 50 %ige Natronlauge, 341,1 g 1,4-Dichlorbenzol (= 2,32 mol), 28,53 g Natriumacetat und 5,07 g ε-Aminocapronsäure (0,035 mol) vorgelegt. Das Umsetzungsgemisch wird langsam zum Sieden erhitzt. Aus dem destillierenden Azetrop, bestehend aus Wasser und p-Dichlorbenzol, wird Wasser abgetrennt und p-Dichlorbenzol in das Reaktionsgefäß zurückgeführt. Nach 2 Stunden ist sowohl im Destillat als auch im Sumpf kein Wasser mehr nachweisbar. Es wird weitere 9 Stunden zum Rückfluß erhitzt und das Produkt durch Fällen in Wasser, Sauerstellen, Elektrolytfreiwaschen mit Wasser und Trocknen in Form einer weißen Faser isoliert. Die Characterisierung erfolgt durch Bestimmung der Schmelzviskosität: $\eta m = 3,6 \times 10^2$ (bei $10^2$ Pa und 306 °C gemessen) und des relativen Molekulargewichtes $M_w$ = 68.000. Charakterisierung der chemischen Einheitlichkeit siehe Tabellen IV und V.

Vergleichsbeispiel 3 B:

Herstellung von linearem Polyphenylensulfid nach EP-A 226 998, Beispiel 1

Ein 2-Liter-Autoklav wird mit 1000 g N-Methyl-2-pyrrolidon, 258,2 g Natriumsulfidschuppen, die 60.44 Gew.-% Natriumsulfid enthalten, 299,9 g 1,4-Dichlorbenzol und 8 g Natriumhydroxid gefüllt. Die Temperatur wird unter Rühren in einer Stickstoff-Atmosphäre auf 220 °C gesteigert und für 10 Stunden gehalten. Anschließend wird auf Raumtemperatur abgekühlt. Zu der Mischung werden 90 g Wasser und 2 g Natriumhydroxid gegeben. Die Mischung wird anschließend aufgeheizt und 5 Stunden bei 260 °C gehalten. Nach Abkühlen wird die Mischung filtriert. Das zurückbleibende, granulatartige Polymer wird mehrfach mit deionisiertem Wasser gewaschen. Es wurden 168,5 g (= 78 % Ausbeute) Polymer einer Schmelzviskosität von 600 Pa.s (T = 306 °C, D = 1000/sec) erhalten. Charakterisierung der chemischen Einheitlichkeit siehe Tabelle IV und V.

Bestimmung von Fehlstellen und Fehlstrukturen mit Hilfe der XANES-Methode

Fehlstellen in Poly-p-arylensulfid können z. B. sein: (partiell) oxidierte Schwefeleinheiten wie Sulfoxide bzw. Sulfone (vgl. beispielsweise US-PS 4 251 575, DE-A 1 938 806 oder R. Gabler, J. Studinka, Chimia 28 (1974), S. 567 ff),
Verzweigungen bzw. Vernetzung durch Nachbehandlungen (z. B. EP-PS 91 088), (reaktive) Endgruppen, die beispielsweise durch Nebenreaktion wie Verseifung, Oxidation oder Angriff eines Hilfsstoffs oder einer Verunreinigung in den Ausgangsstoffen gebildet worden sein können, Di- bzw- Polysulfideinheiten (B. Hortling, J.J. Lindberg, Makromol. Chem. 179 (1978) S. 1707; B. Hortling, ibid. 178 (1977), S. 2185), Etherbrücken, Polyaromaten wie z. B. Di- oder Terphenylgruppen stellungsisomere Einheiten wie ortho- bzw. meta-substituierte Aromaten und/oder Thiophen- bzw. Thiantreneinheiten (J.W. Cleary, Polymer Preprints 25 (1984), S. 36).

Fehlstrukturen in Polymeren können prinzipiell durch Standardmethoden der Analytik wie IR-, UV-, NMR-Spektroskopie oder chemische Analysenverfahren etc. nachgewiesen werden. Gegebenenfalls kann man mit Hilfe der ESCA-Methode einige Fehlstrukturen nachweisen (vgl. z. B. A. Kaul, American Chemical Society, Division of Polymer Chemistry, Polymer Preprints 28 (1987), S.229-231). Kleinste Mengen dieser Fehlstrukturen könnten z. B durch Röntgenabsorptionsspektroskopie festgestellt werden.

Zur Feststellung, ob Fehlstrukturen in Poly-p-arylensulfiden vorliegen, nimmt man von der entsprechenden Substanz ein Röntgenabsorptionsspektrum in der Umgebung der Schwefel-1s-Kante auf. Diese Nahkantenspektren werden XANES-Spektren genannt (=X-ray absorption near edge structure). Sie sind empfindlich auf die chemische Umgebung des angeregten Atoms (z. B. J.B. Pendry, Comments on Solid State Physics, Vol. 10, S. 219 ff. (Jahrgang 1983)). Die XANES-Spektren enthalten Information bezüglich der ersten, zweiten und gegebenenfalls auch dritten Koordinationssphäre des Aufatoms (= das Atom, an dessen K-Kante gemessen wird), im Falle von PAS des Schwefelatoms.

Bei der Analyse verwendet man Strukturen im Absorptionsspektrum unterhalb des Ionisationslimits, die zu Übergängen in gebundene Molekülorbitale gehören ("weiße Linien") und die Strukturen im Absorptionskoeffizienten oberhalb des Ionisationslimits, die durch Vielfachstreuung des auslaufenden Elektrons verursacht werden.

Die Spektren werden zum Beispiel mit einem Vakuum-Doppelkristallröntgenmonochromator aufgenommen (z. B. Lemonier, M., Collet, O., Depautex, C., Esteva, J.M. und Raoult, D. (1978), Nucl. Instrum. Methods Vol. 152, S. 108 ff). Als Kristalle kann man zum Beispiel Indium-Antimon (In/Sb (1,1,1) Kristalle, Bergkristalle hoher Güte, Silizium-1,1,1-Kristalle, Germanium-1,1,1-Kristalle verwenden. Die Absoluteichung der Energie kann zum Beispiel gegen die bekannte weiße Linie von Argon vorgenommen werden. Sie liegt bei 3203.54 eV (vgl. M. Breinig et al, Phys. Rev. A, Vol. 22 (1980), S. 520 ff, insbesondere: S. 520 rechte Spalte oben: Genauigkeit besser als 0,1 eV und: Seite 525: Energielage der weißen Linie von Argon).

Die Energielage der gemessenen Spektren wird mit einer geeichten Probe einer Modelsubstanz, die z. B. Schwefel definiert eingebaut hat, bestimmt. So kann eine absolute und relative Genauigkeit von ± 0,1 eV erreicht werden. Das Auflösungsvermögen des Monochromators entspricht etwa der Lebensdauer des Schwefel-1s-Loches.

Für den Nachweis der Fehl- bzw. Fremdstrukturen in Poly-p-arylensulfiden, vorzugsweise Polyphenylensulfiden werden an den Polymeren die Messungen in Transmission durchgeführt. Es werden vorzugsweise Polymere verwendet, die bei der Herstellung aus der Polymerisation ohne Nachbehandlung gewonnen

werden. Sie können bereits zu Formkörpern, beispielsweise Folien, verarbeitet sein. Oberflächeneffekte, die an Probekörpern auftreten können, sind vernachlässigbar. Die Probendicke wird so gewählt, daß Sättigungseffekte im Spektrum vermieden werden. Die Messungen werden in Abwesenheit von UV-Licht durchgeführt.

Nach Aufnahme der Spektren werden diese in bekannter Weise korrigiert, z.B. um Einflüsse von höheren Elektronenschalen im betrachteten Atom auszumitteln. Dann werden die Spektren auf die Intensität der weißen Linie normiert, wobei hierbei die Bande mit dem höchsten Absorptionskoeffizienten verwendet wird. Zur Differenzbildung von Spektren subtrahiert man die normierten Spektren der einzelnen Proben.

Die Messungen werden mit einem intensiven Röntgenkontinuum durchgeführt. Dies wird zum Beispiel durch Hochleistungs-rotierende Anoden geliefert. Beispielsweise können als Röntgenstrahlenquellen die in "Internal Report UUIP-817, April 1973, UPPSALA University Institute of Physics unter: 'U. Gelius, E, Basilier, S. Svensson, T. Bergmark and K. Siegbahn: A High Resolution ESCA Instrument with X-Ray-Monochromator for Gases and Solids'" beschriebenen Quellen, gegebenenfalls auch die im Internal Report UUIP-1128, Oktober 1984 unter: "Kai Siegbahn: Electron Spectroscopy for Atoms, Molecules and Condensed Matter - an Overview" beschriebenen Quellen verwendet werden. Man kann auch geeignete Synchrotronstrahlungsquellen oder Speicherringe verwenden.

Die Röntgenabsorptionsspektroskopie im XANES-Bereich ist in der Lage, Fehl- bzw. Fremdstrukturen auch in Poly-p-arylensulfiden nachzuweisen.

Als Modellsysteme für solche Fehl- bzw. Fremdstrukturen kommen eine Reihe von reinen Verbindungen in Frage, die in Tabelle I zusammengefaßt sind. Von diesen Modellverbindungen wurden in der schon beschriebenen Weise die XANES-Spektren aufgenommen. Die Hintergrund-korrigierten Spektren (Einfluß der höheren Schalen) wurden in beschriebener Weise normiert und sind in Abbildungen 1 (a) bis 1 (n) wiedergegeben. Die in den Zeichnungen angegebenen Zahlen an den Absorptionsspitzen, wie sie direkt im XANES-Spektrum ohne Entfaltung - d. h. Aufspaltung in einzelne Absorptionslinien, die überlagert im XANES-Spektrum gemessen werden - anfallen, sind in der Tabelle I mit den entsprechenen Energielagen in Klammern (Zahlen in eV) wiedergegeben.

Die Substanzen 1 (a) bis 1 (n) sind bekannt. Die Substanz (1 (n)) erhält man z.B. nach dem Zyklenextraktions-Verfahren (z. B. Tetrahedron Letters 23, (1982), S. 373). Die Zyklen wurden dabei nicht von oligomeren linearen bzw. anderen Strukturen gereinigt.

Man erkennt an den Abbildungen und den Energielagen, daß die Strukturierung des XANES-Spektrums sehr reichhaltig ist. Alle Absorptionsmaxima sind energetisch mit einer Genauigkeit der Energiebestimmung von ± 0,1 eV aufgelöst.

Als Beispiel eines XANES-Spektrums einer Modellverbindung ohne Fehlstrukturen kann das XANES-Spektrum z.B. einer gereinigten zyklischen Verbindung herangezogen werden (vgl. z.B. Tetrahedron Letters 23 (1982), S. 373; Struct. Comm. 11 (1982), S. 1751). Die XANES-Charakterisierung dieser Substanz in Tabelle II zeigt, daß nur zwei - schulterfreie - Absorptionsmaxima im Energiebereich zwischen 2470 und 2490 eV auftreten. Die übrigen Absorptionslinien, die auf die Anwesenheit von Fehlstrukturen schließen lassen, werden nicht gefunden. Auf diese Weise kann man von jeder schwefelhaltigen Substanz mit Hilfe der XANES-Methode entscheiden, ob die Substanz Fehlstrukturen der oben genannten Art enthält oder nicht.

Tabelle I

Einige der möglichen Fehlstrukturen und die Charakterisierung der XANES-Spektren. Die entsprechenden normierten XANES-Spektren sind in den Abbildungen 1.a) bis 1.n) wiedergegeben. Die lokalen Absorptionsmaxima dieser Spektren sind für jede Fehlstruktur mit steigender Energielage aufgeführt und in den Spektren der Abbildungen markiert (Ziffern).

| Nr. der Abbildg. | Strukturformel | Lokale Absorptionsmaxima (Alle Zahlen in eV) |
|---|---|---|
| 1. (a) | 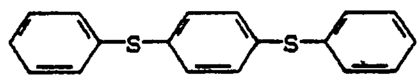 | 2472.72 (1), 2473.72 (2)<br>2477.27 (3), 2481.4 (4) |
| 1. (b) | 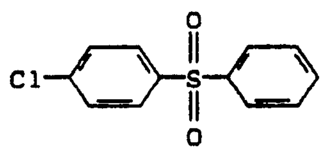 | 2472.91 (1), 2479.72 (2)<br>2489.16 (3) |
| 1. (c) | 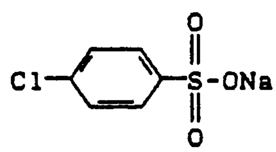 | 2472.96 (1), 2480. 59 (2 )<br>2487.65 (3) |
| 1. (d) | 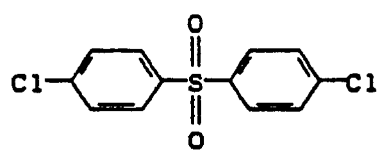 | 2472.64 (1), 2479.40 (2)<br>2485.40 (3), 2488.90(4) |
| 1. (e) | 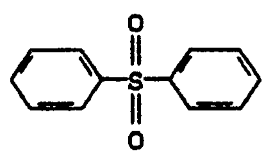 | 2473.00 (1), 2479.91 (2)<br>2489.64 (3) |

Fortsetzung Tabelle I:

| Nr. der Abbildg. | Strukturformel | Lokale Absorptionsmaxima (Alle Zahlen in eV) |
|---|---|---|
| 1. (f) | 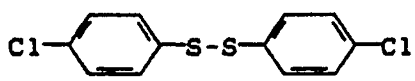 | 2471.36 (1), 2473.24 (2) 2479.1 (3) |
| 1. (g) | 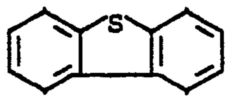 | 2472.44 (1), 2475.32 (2) 2479.50 (3) |
| 1. (h) | 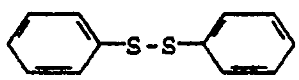 | 2471.56 (1), 2473.38 (2) 2479.3 (3) |
| 1. (i) | $CH_3-S-CH_3$ | 2472.61 (1), 2474.87 (2) |
| 1. (j) | $CH_3-S-S-CH_3$ | 2471.90 (1), 2473.15 (2) 2476.2 (3), 2480.0 (4) |
| 1. (k) | 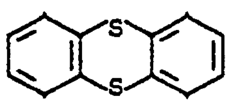 | 2473.22 (1), 2479.00 (2) (breites Plateau) |
| 1. (l) | 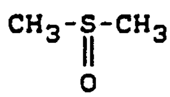 | 2473.0 (1), 2475.2 (2) |
| 1. (m) | 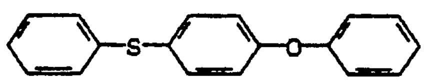 | 2472.6 (1), 2473.75 (2) 2477.4 (3), 2481.30 (4) |
| 1. (n) | 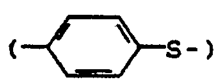 ungereinigt cycl. | 2473.29 (1), 2477.02 (2) 2480.70 (3) |

Tabelle II

Reine PPS-Zyklen (Herstellung und analytische Charakterisierung siehe Text) - Charakterisierung des XANES-Spektrums wie in Tabelle I,

| Nr. der Abbildg. | Strukturformel | Lokale Absorptionsmaxima (Alle Zahlen in ev) |
|---|---|---|
| 2. | 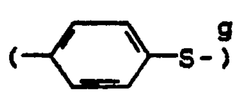 gereinigt cycl. | 2473.57 (1), 2481.05(2) |

Tabelle III

| Erfindungsgemäße Beispiele - Charakterisierung des XANES-Spektrums wie in Tabelle I, | | |
|---|---|---|
| Nr. des Beispiels | Lokale Absorptionsmaxima (alle Zahlen in eV) | |
| 1 A | 2473.67 (1) | 2480.88 (2) |
| 1 B | 2474.0 (1) | 2481.26 (2) |
| 2 B | 2474.0 (1) | 2481.30 (2) |

Tabelle IV

Nicht erfindungsgemäße Beispiele zum Vergleich

Von den nicht erfindungsgemäßen Beispielen der nachfolgenden Tabelle wurden XANES-Spektren wie im Text beschrieben aufgenommen und auf die absolute Absorptionsspitze normiert.

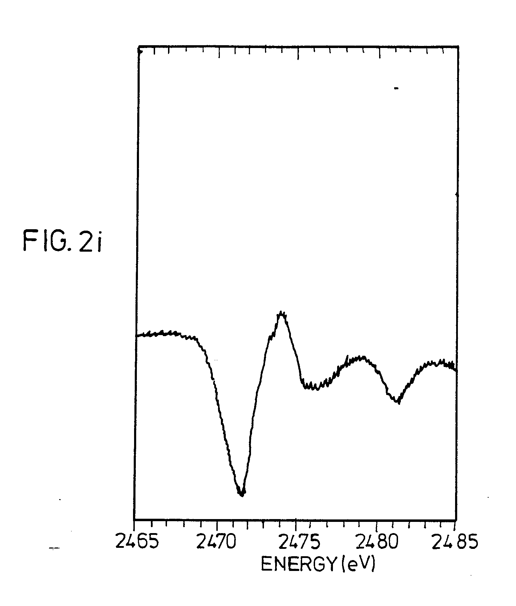

Die normierten Spektren wurden von den normierten Spektrum des erfindungsgmäßen Beispiels 1 B subtrahiert. Diese Differenzen sind in den Abbildungen 2. (a)-(i) graphisch dargestellt.

Da die spektralen Unterschiede zwischen den erfindungsgemäßen Beispielen 1 B und 2 B marginal sind, wurden nur die Differenzen zu Beispiel 1 B abgebildet.

| Nr. der Abbildg. | Bezeichnung des nicht-erfindungsgemäßen Beispiels |
|---|---|
| 2. (a) | Vergleichsbeispiel 1 A |
| 2. (b) | Vergleichsbeispiel 2 A |
| 2. (c) | Vergleichsbeispiel 3 A |
| 2. (d) | Vergleichsbeispiel 1 B |
| 2. (e) | Vergleichsbeispiel 2 B |
| 2. (f) | Vergleichsbeispiel 3 B |

| Handelsprodukte zum Vergleich: | |
|---|---|
| Nr. der Abbildg. | Bezeichnung des Handelsproduktes |
| 2. (g) | FORTRON 1140 B 1® |
| 2. (h) | RYTON P4® |
| 2. (i) | CRASTON XMB 3100 Natur 40 % GF® |

Tabelle V

| Zahl der Absorptionsmaxima im XANES-Spektrum zur Bestimmung der chemischen Einheitlichkeit. | | |
|---|---|---|
| Bsp.-Nr. | Zahl der Absorptionsmaxima im Energiebereich zwischen | |
| | 2470-2475 eV | 2475-2490 eV |
| Beispiel 1 A | eins | eins |
| Beispiel 1 B | eins | eins |
| Beispiel 2 B | eins | eins |
| Vergleichsbeispiel 1 A | zwei | zwei |
| Vergleichsbeispiel 2 A | zwei | zwei |
| Vergleichsbeispiel 3 A | zwei | zwei |
| Vergleichsbeispiel 1 B | zwei | zwei |
| Vergleichsbeispiel 2 B | zwei | zwei |
| Vergleichsbeispiel 3 B | zwei | zwei |

Tabelle VI

| Zusammenfassung der Schmelzviskositäten der Beispiele als Maß für die Molekulargewichte | | |
|---|---|---|
| Beispiel-Nr. | $\eta$m in Pa.s (T = 306 ° C, D = 1000/sec) | $M_w$(rel) |
| Beispiel 1 A | 980 | 64.137 |
| Beispiel 1 B | 274 | 61.082 |
| Beispiel 2 B | 202 | 57.519 |
| Vergleichsbeispiel 1 B | 4.5 | n.b. |
| Vergleichsbeispiel 1 A | 20 | n.b. |
| Vergleichsbeispiel 2 B | 360 | 68.000 |
| Vergleichsbeispiel 2 A | 120 | n.b. |
| Vergleichsbeispiel 3 B | 600 | n.b. |
| Vergleichsbeispiel 3 A | 390 | n.b. |
| n.b. = nicht bestimmt | | |

**Ansprüche**

1. Lineare und verzweigte Poly-p-arylensulfide, dadurch gekennzeichnet, daß sie im XANES-Spektrum an der K-Kante des Schwefelatoms (gemessen in Transmission bei einer Genauigkeit der Energiebestimmung (relativ und absolut) von mindestens ± 0,1 eV)) im Energiebereich zwischen 2470 und 2490 eV zwei Absorptionsmaxima haben, jeweils
a) eines im Energiebereich von 2470 bis 2475,5 eV, bevorzugt von 2473 bis 2475 eV, besonders bevorzugt von 2473.5 bis 2474.1 eV
und
b) eines im Energiebereich von 2475,5 bis 2490 eV bevorzugt von 2478 bis 2482 eV, besonders bevorzugt von 2480.8 bis 2481.4 eV,
und
das Absorptionsmaximum höchster Intensität im Energiebereich a) liegt

und
das Absorptionsmaximum im Energiebereich b) höchstens 85%, bevorzugt höchstens 80%, besonders bevorzugt höchstens 73% der Intensität des Absorptionsmaximums im Energiebereich a) hat.

2. Lineare und verzweigte Poly-p-arylensulfide, vorzugsweise Poly-p-phenylensulfide nach Anspruch 1, dadurch gekennzeichnet, daß sie überwiegend der Formel (I)

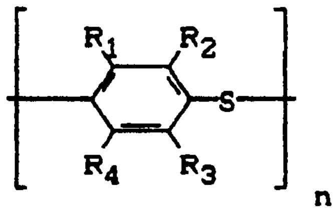

(I),

in welcher
$R_1$, $R_2$, $R_3$ und $R_4$ gleich oder verschieden sein können und für Wasserstoff (H), $C_1$-$C_{12}$ Alkyl, $C_4$-$C_{16}$ Cycloalkyl, $C_6$-$C_{20}$ Aryl, $C_7$-$C_{30}$ Alkaryl und/oder-Aralkyl stehen
entsprechen.

3. Poly-p-arylensulfide nach Anspruch 1, dadurch gekennzeichnet, daß zusätzlich die Schmelzviskosität $\eta_m$ von 20 bis 500.000 Pa.s und das Gewichtsmittel des relativen Molekulargewichtes $M_w$ (rel) von 25.000 bis 380.000, sich vorzugsweise verhalten wie
$\lg \eta_m = 3.48 \cdot \lg M_w (rel) - 14.25 \pm 0{,}1$,
besonders bevorzugt wie
$\lg \eta_m = 3.48 \cdot \lg M_w (rel) - 14.25 \pm 0{,}05$.

4. Verfahren zur Herstellung von linearen und verzweigten Poly-p-arylensulfiden des Anspruchs 1 in an sich bekannter Weise aus Dihalogenaromaten der Formel (II)

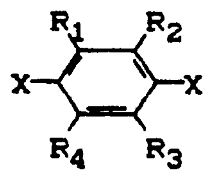

(II),

in welcher
$R^1$ bis $R^4$ die gleiche Bedeutung haben, wie bei Formel (I) angegeben,
X für Halogen (z.B. Chlor oder Brom) steht,
und
0 bis 5 Mol.-%, bevorzugt 0 bis 1,25 Mol.-%, bezogen auf die Summe der Dihalogenaromaten der Formel (II), eines Tri- oder Tetrahalogenaromaten der Formel (III)
$ArX_n$ (III),
in welcher
Ar ein aromatischer oder heterocyclischer $C_6$-$C_{30}$-Rest ist, bei dem bis zu drei Ring-C-Atome durch Heteroatome wie N, O, S ersetzt sein können,
X für Halogen wie Brom oder Chlor steht und
n für die Zahlen 3 oder 4 steht,
und
0 bis 12 Mol.-%, bezogen auf die Summe der Dihalogenaromaten der Formel (II), von Molekulargewichtsreglern,
und
einem Schwefelspender,
dadurch gekennzeichnet, daß

(I) die Reaktion unter Schutzgasatmosphäre, bevorzugt Stickstoff, abläuft,

(II) die Umsetzung durch Vermischen von wasserhaltigen Schwefelspendern mit Lösungen der Dihalogenaromaten in einem organischen Lösungsmittel, gegebenenfalls in Gegenwart von bekannten Hilfsstoffen und/oder Katalysatoren, bei Temperaturen oberhalb 212 °C erfolgt, wobei gleichzeitig eine spontane Entwässerung eintritt und der Wassergehalt der Reaktionslösung 0 bis 0.02 Gew.-% Wasser nicht überschreitet,

(III) als wasserhaltige Schwefelspender ein Gemisch von Alkalisulfid und Alkalihydrogensulfid verwendet wird, wobei pro Mol Alkalisulfid 0,01 bis 1 Mol Alkalihydrogensulfid eingesetzt wird,

(IV) nach Dosierung des Schwefelspenders ein Überschuß an Dihalogenaromat, vorzugsweise ein Überschuß von mindestens 0,1 Mol Dihalogenaromat pro Mol Schwefelspender vorliegen muß, der während des Reaktionsverlaufs kontinuierlich auf einen Endwert in Höhe von 0 bis 0,3 Mol.-% Dihalogenaromatenüberschuß durch destillative Abtrennung vermindert wird.

5. Verfahren zur Herstellung von linearen Poly-p-arylensulfiden nach Anspruch 1 in an sich bekannter Weise aus Dihalogenaromaten der Formel (II)

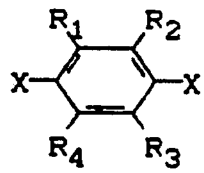

(II),

in welcher
$R^1$ bis $R^4$ die bei Formel (I) angebenene Bedeutung haben und
X für Halogen steht,
und einem Schwefelspender, dadurch gekennzeichnet, daß die Reaktion unter Schutzgasatmosphäre abläuft, die Umsetzung durch Vermischen von wasserhaltigen Schwefelspendern mit Lösungen der Dihalogenaromaten in einem organischen Lösungsmittel, gegebenenfalls in Gegenwart von bekannten Hilfsstoffen und/oder Katalysatoren, bei Temperaturen oberhalb 212 °C erfolgt, wobei gleichzeitig eine spontane Entwässerung eintritt und der Wassergehalt der Reaktionslösung 0 bis 0,02 Gew.-% Wasser nicht überschreitet, als wasserhaltige Schwefelspender ein Gemisch von Alkalisulfid und Alkalihydrogensulfid verwendet wird, wobei pro Mol Alkalisulfid 0.01 bis 0,5 Mol-% Alkalihydrogensulfid eingesetzt wird, nach Dosierung des Schwefelspenders ein Überschuß an Dihalogenaromat, vorzugsweise ein Überschuß von mindestens 0,1 Mol Dihalogenaromat pro Mol Schwefelspender vorliegt, der während des Reaktionsverlaufs kontinuierlich auf einen Endwert in Höhe von 0 bis 0.3 Mol-% Dihalogenaromatenüberschuß durch destillative Abtrennung vermindert wird.

6. Verwendung von Poly-p-arylensulfiden nach Anspruch 1 gegebenenfalls in Gegenwart von Füll- und/oder Verstärkungsstoffen, Additiven und/oder anderen Polymeren zur Herstellung geformter Körper.

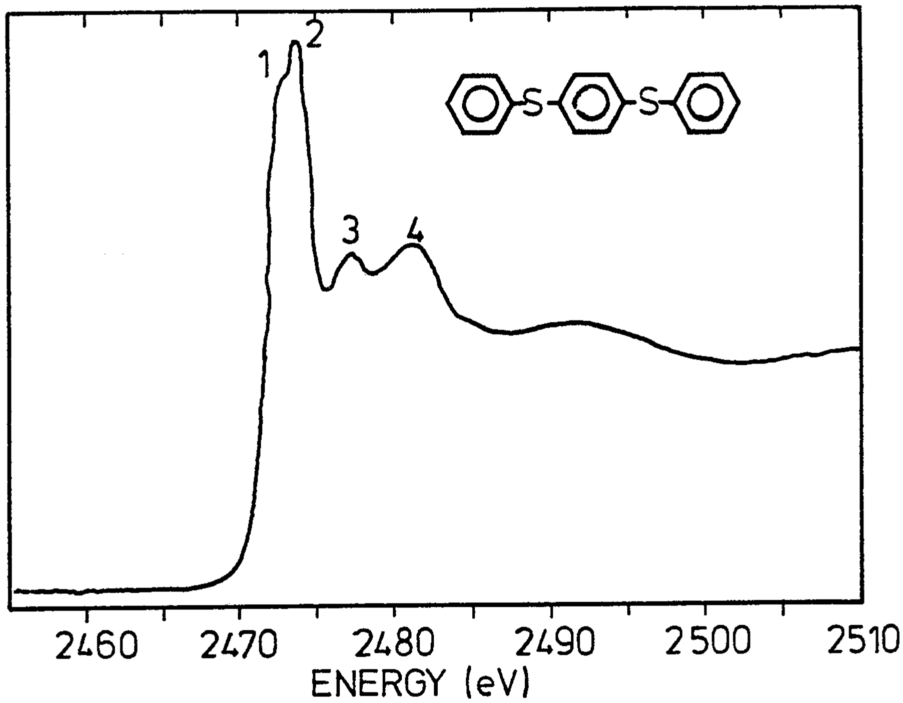
1
2
3
4
2460
2470
2480
2490
2500
2510
ENERGY (eV)

FIG. 1a

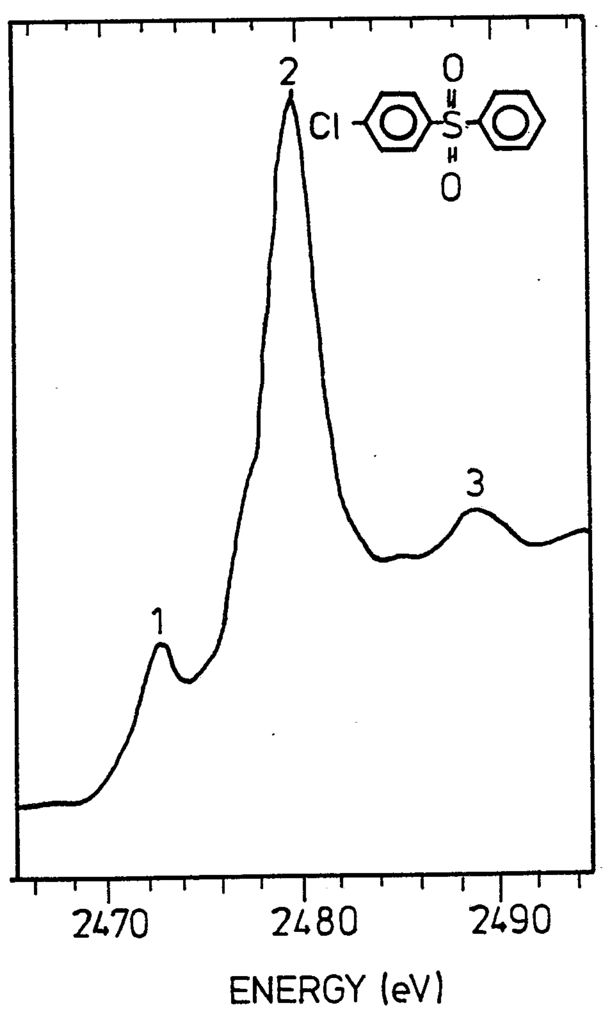
2
1
3
2470
2480
2490
ENERGY (eV)

FIG. 1b

FIG.1c

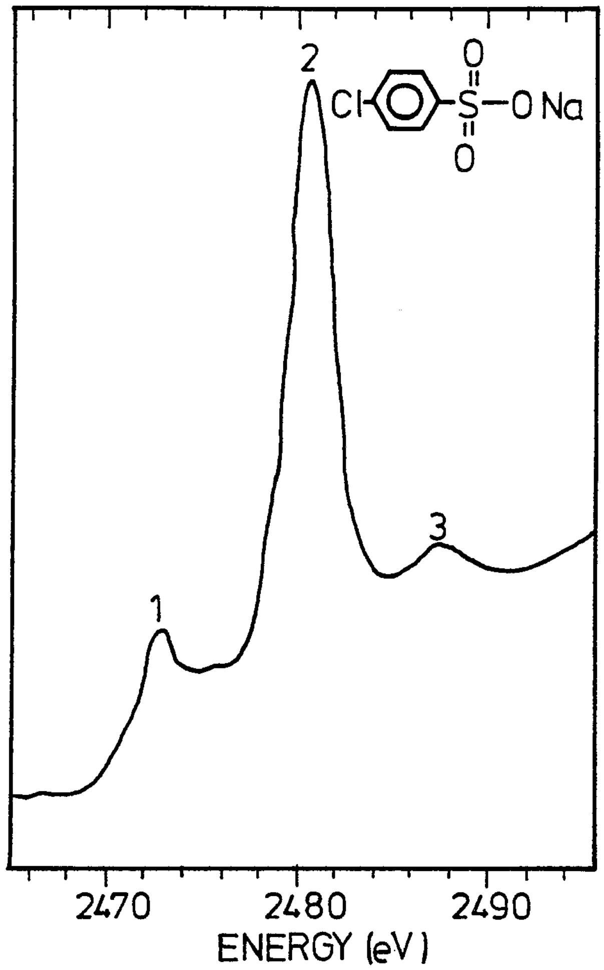


FIG.1d

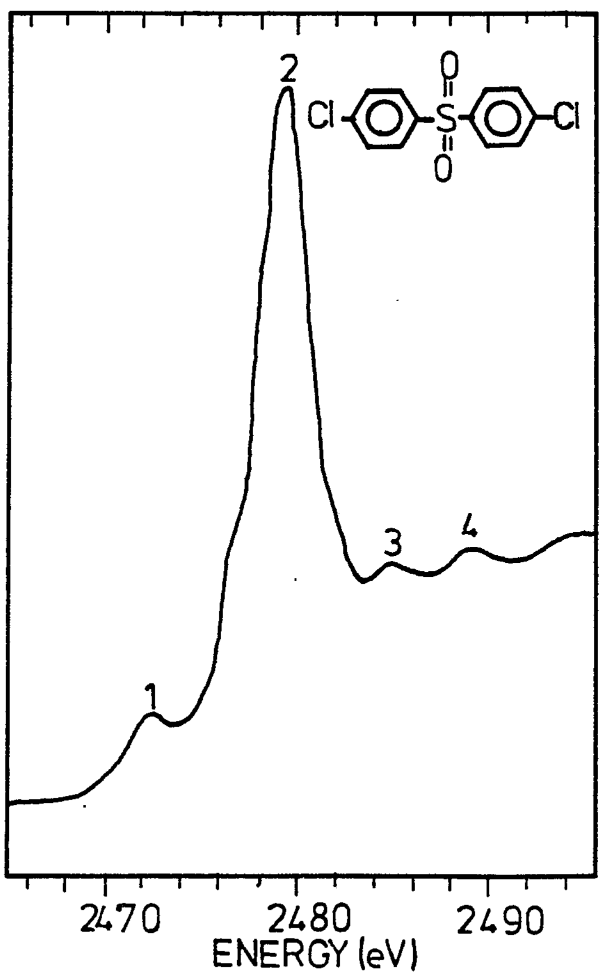

FIG.1e

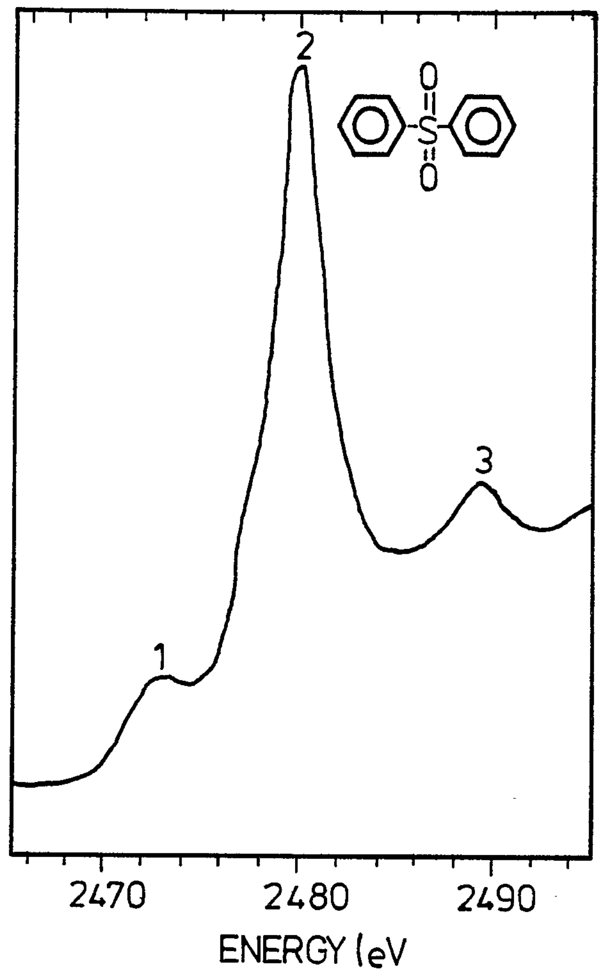
2
1
3
2470
2480
2490
ENERGY (eV

FIG.1f

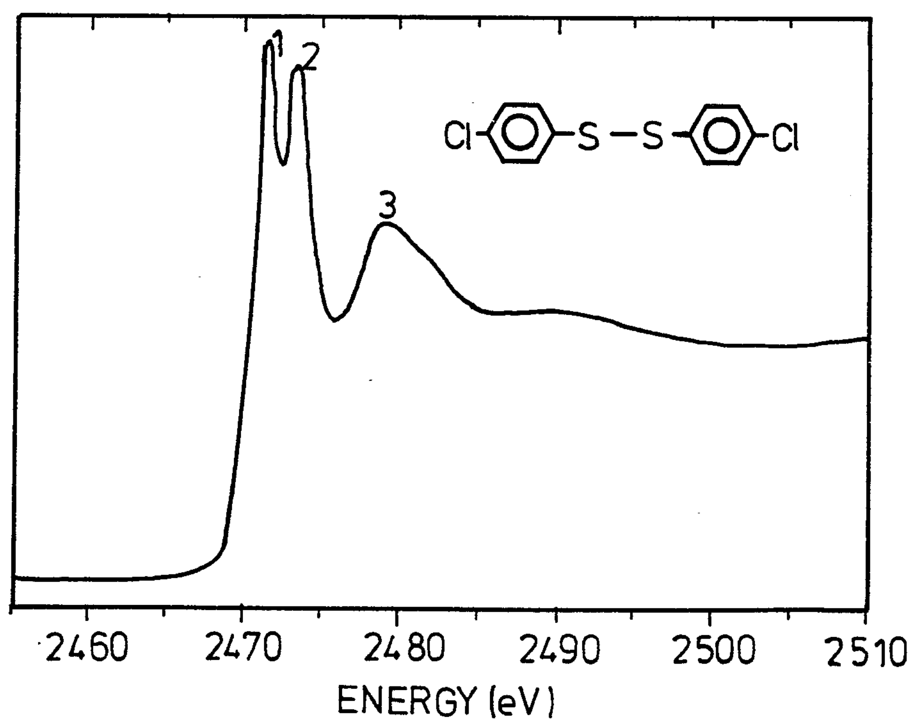
1
2
3
2460
2470
2480
2490
2500
2510
ENERGY (eV)

FIG.1g

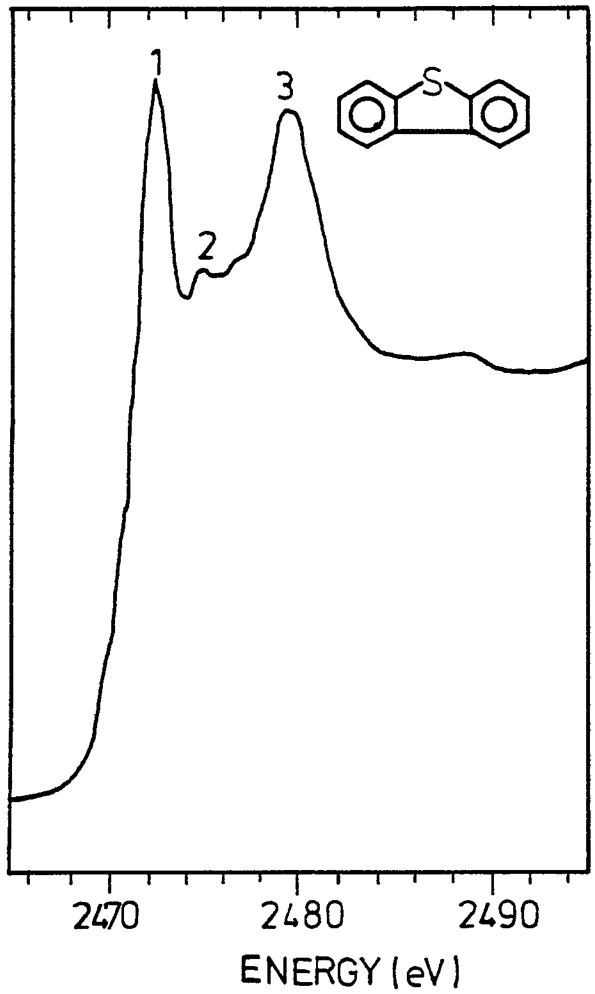
1
2
3
2470
2480
2490
ENERGY (eV)

FIG.1h

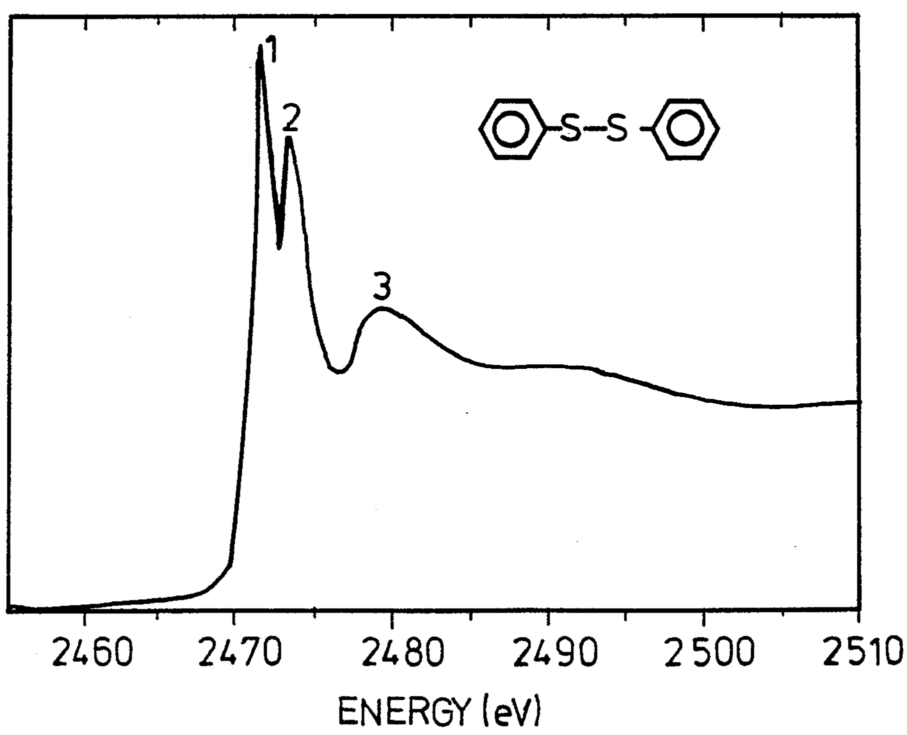
1
2
3
2460
2470
2480
2490
2500
2510
ENERGY (eV)

FIG. 1i

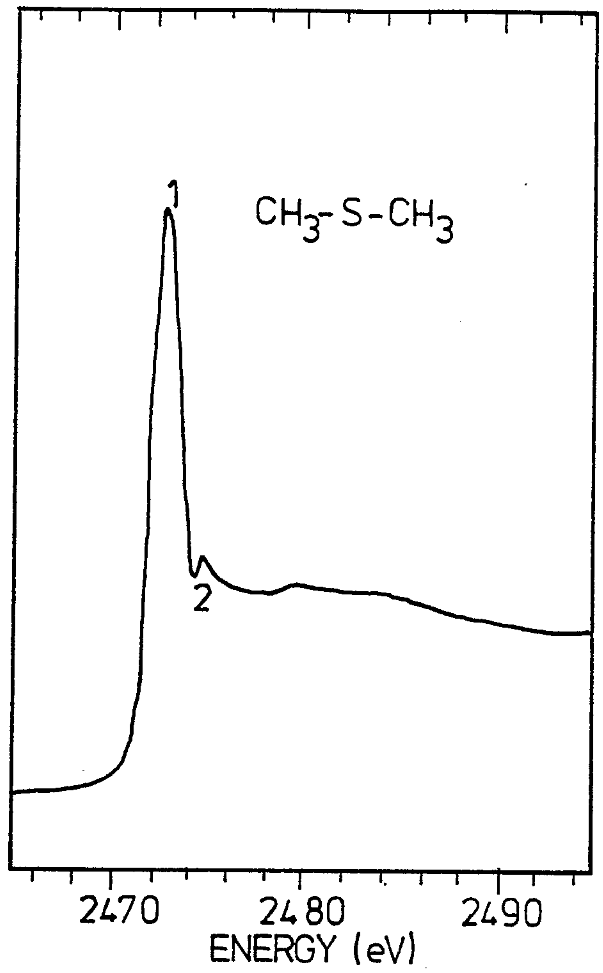
1
$CH_3$-S-$CH_3$
2
2470
2480
2490
ENERGY (eV)

FIG.1j

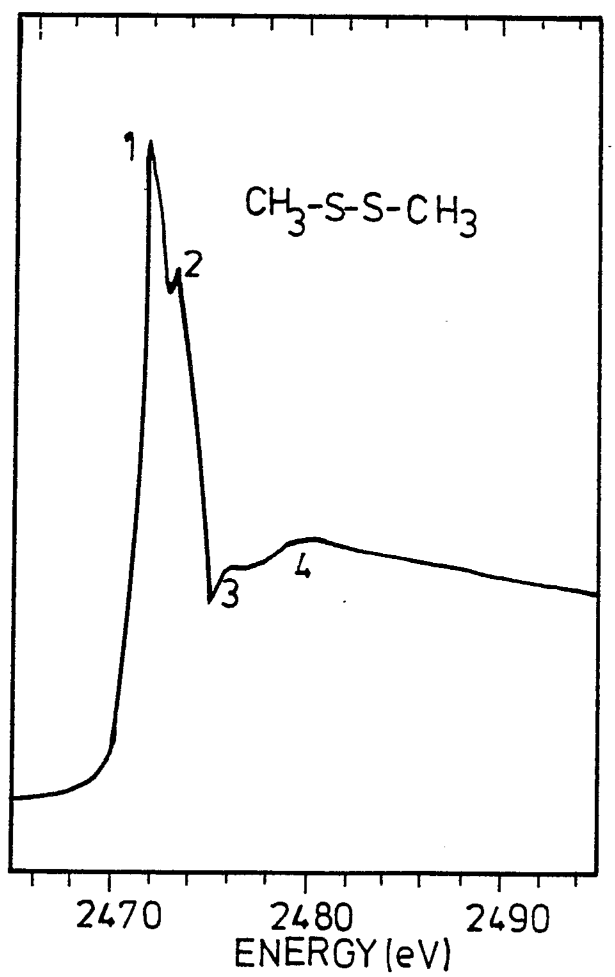
1
$CH_3$-S-S-$CH_3$
2
3
4
2470
2480
2490
ENERGY (eV)

FIG.1k

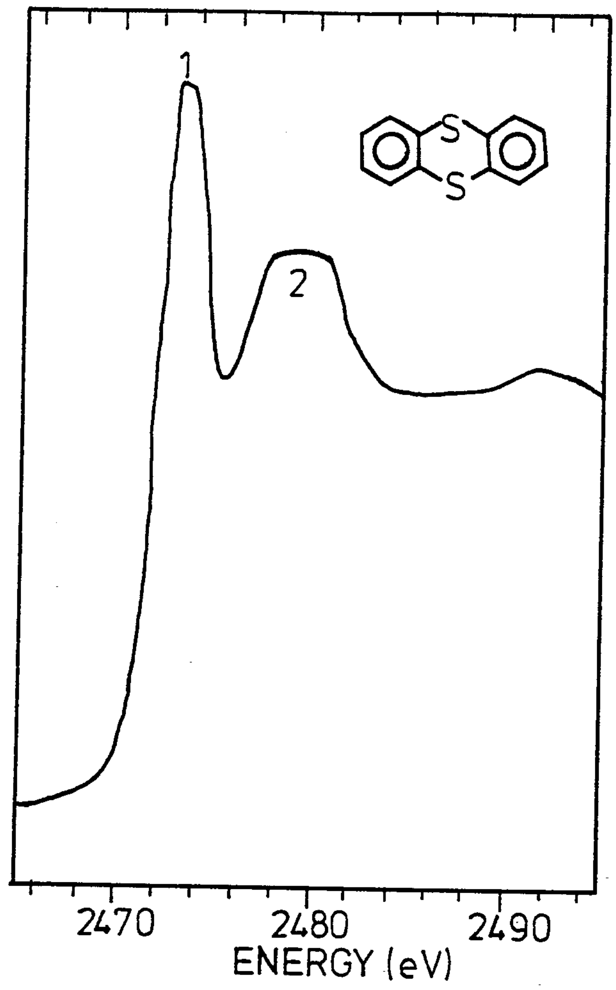


FIG.1l

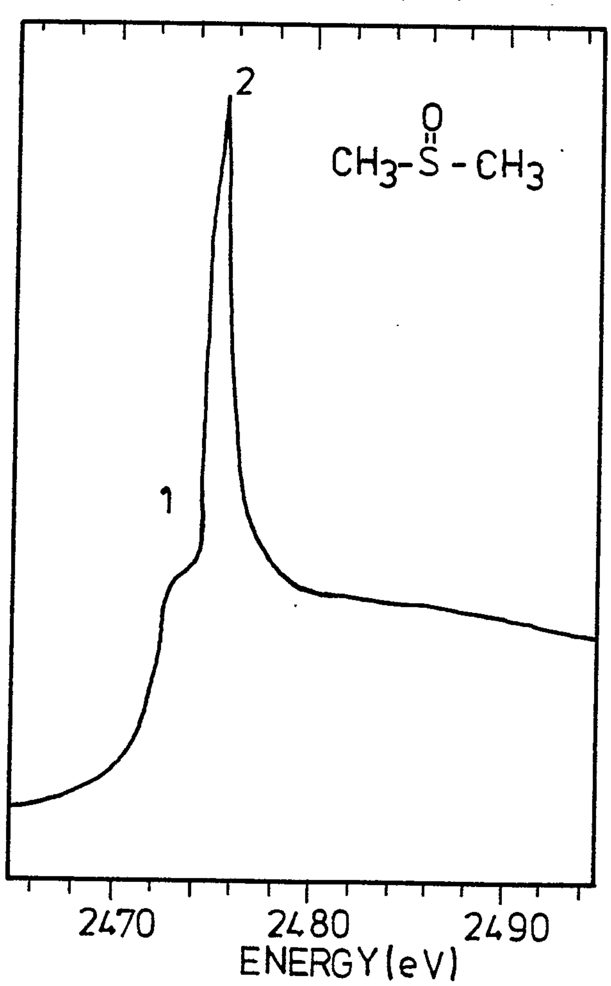

FIG. 1m

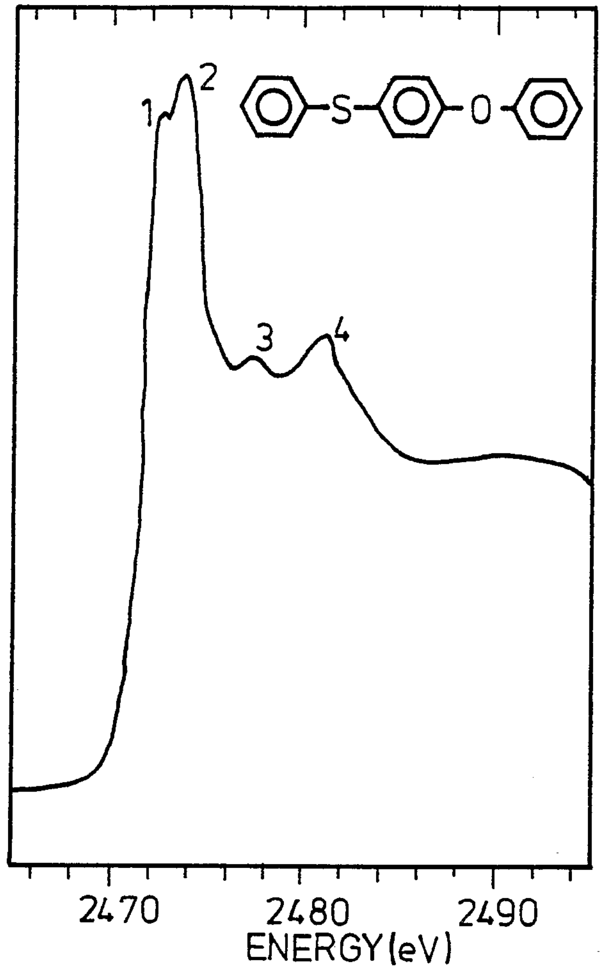
1
2
3
4
2470
2480
2490
ENERGY (eV)

FIG. 1n

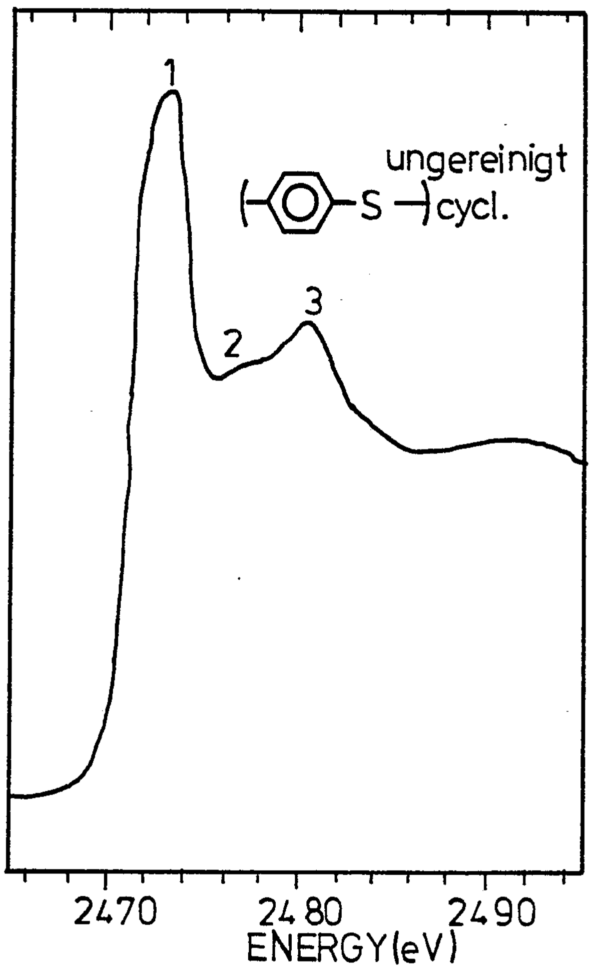
1
ungereinigt
cycl.
2
3
2470
2480
2490
ENERGY (eV)

FIG. 2a

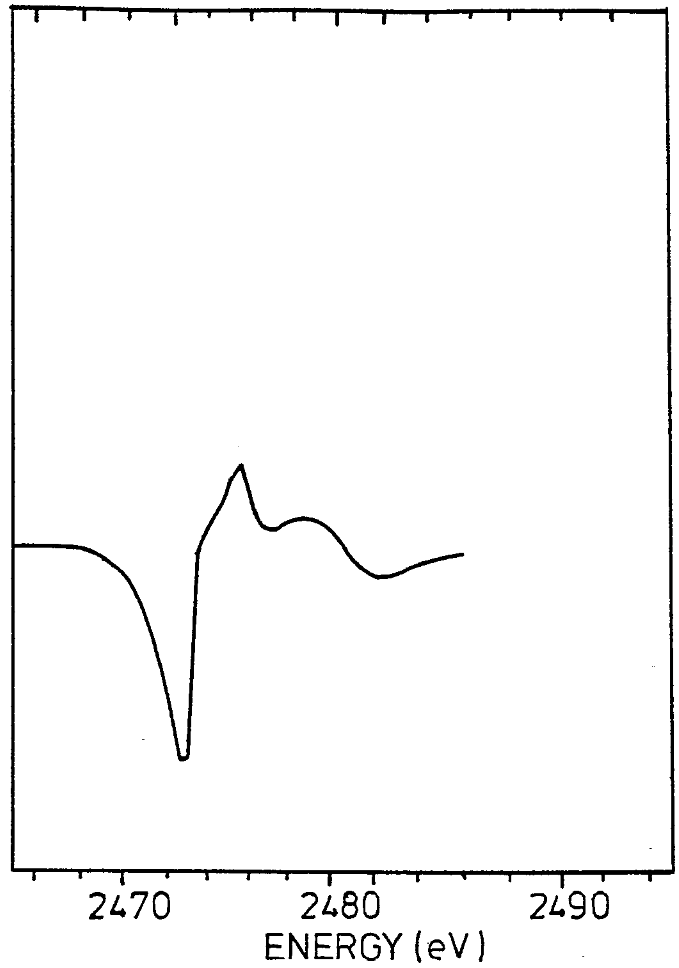


FIG.2b

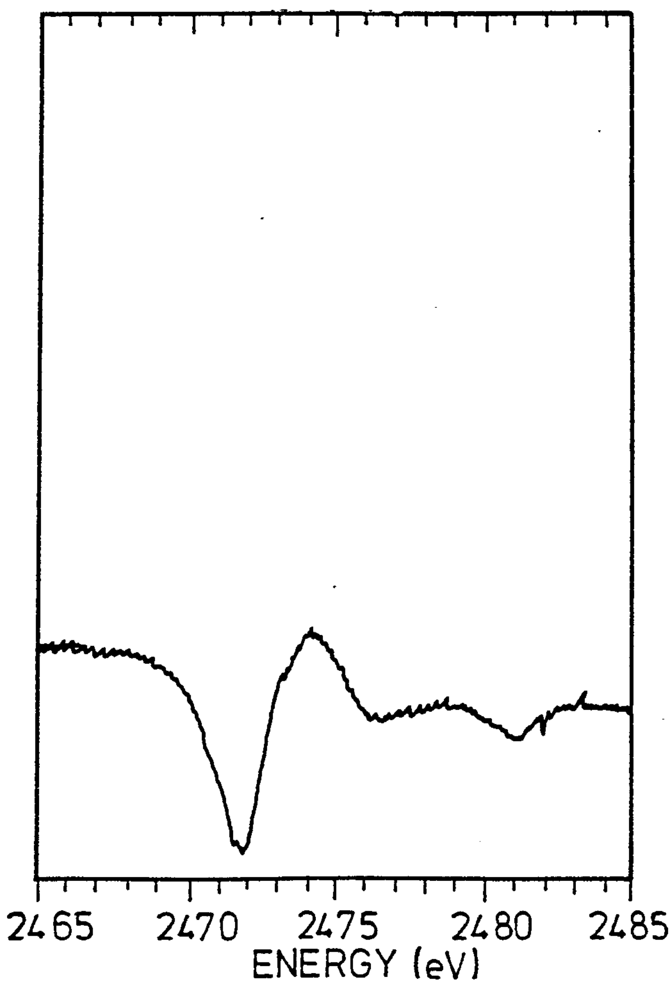

FIG. 2c

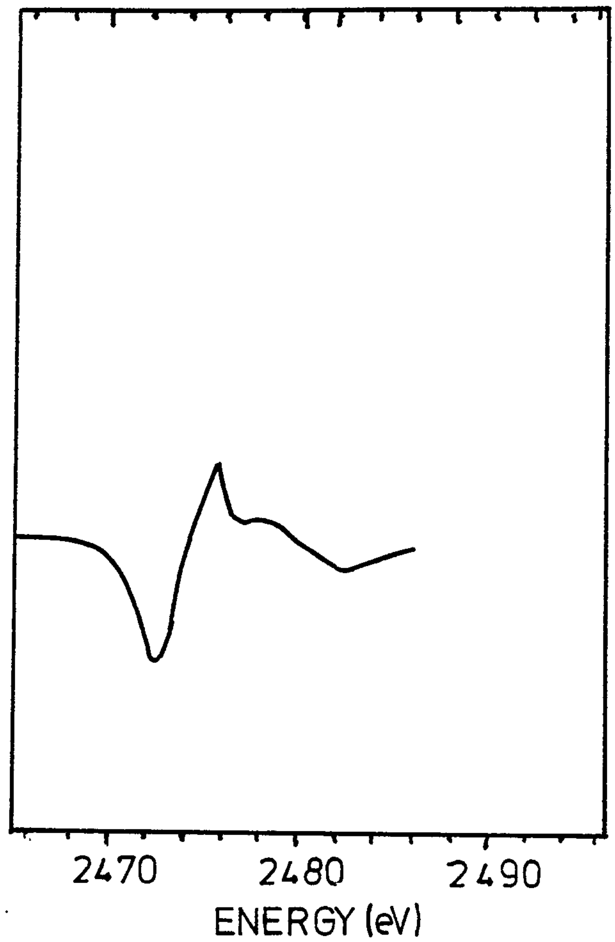


FIG. 2d

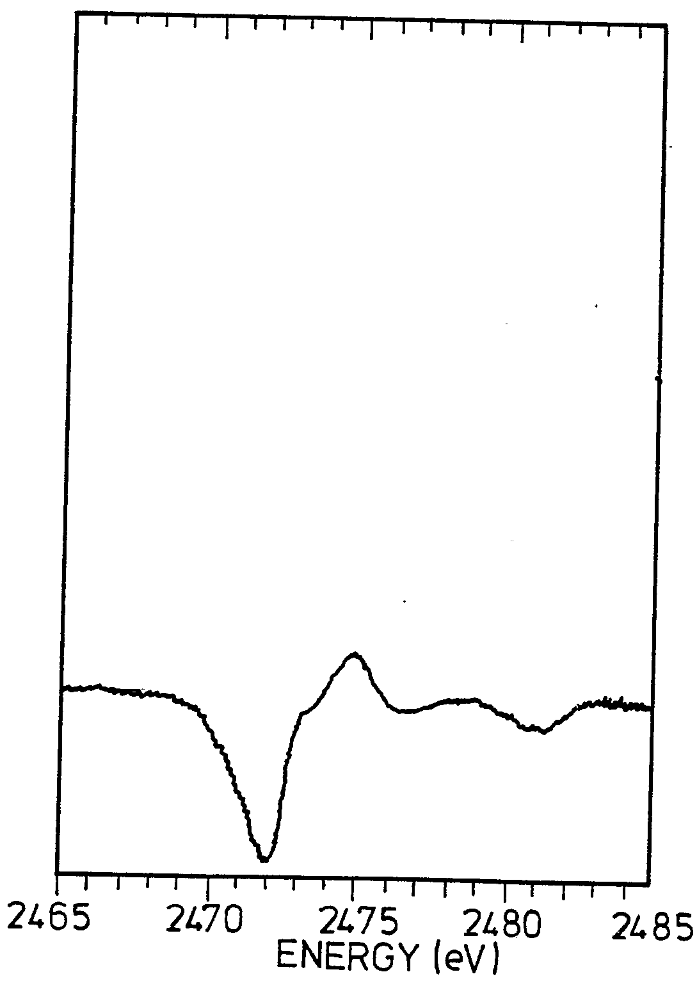

FIG.2e

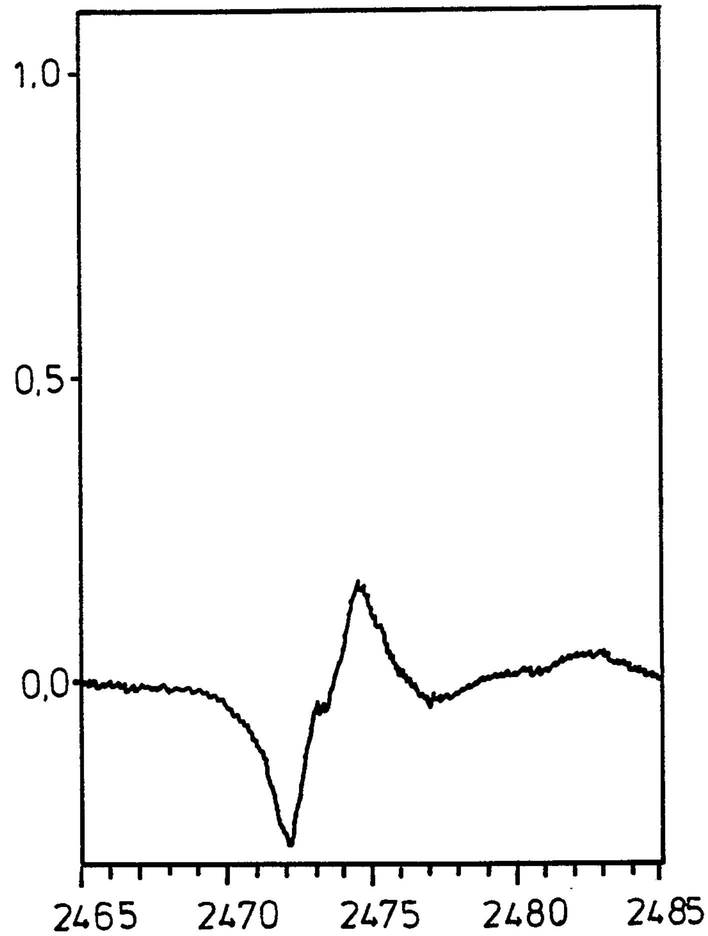
1,0
0,5
0,0
2465
2470
2475
2480
2485

FIG.2f

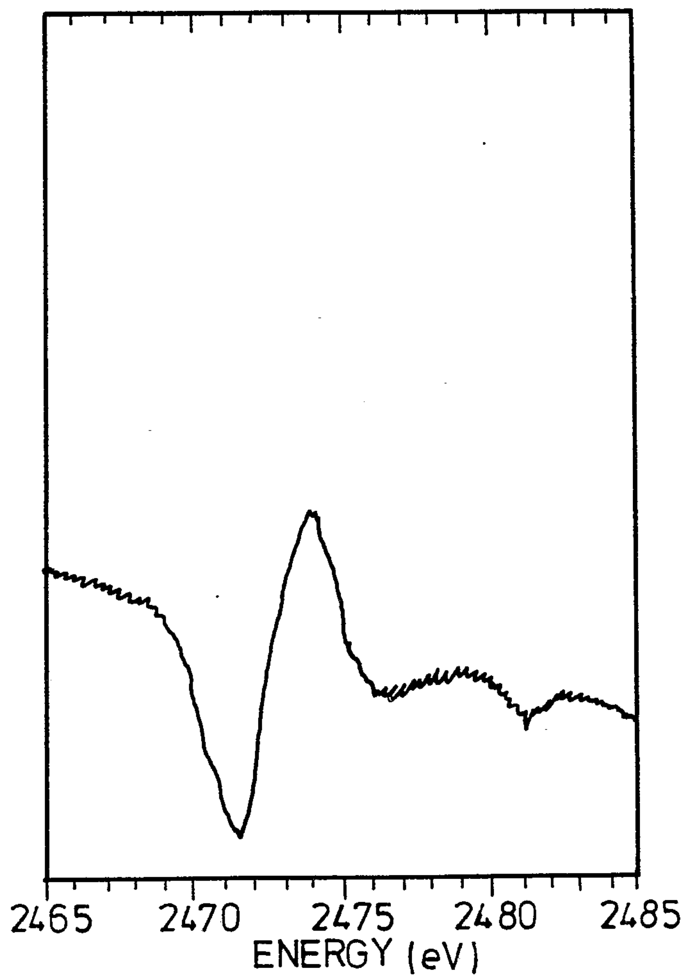
2465
2470
2475
2480
2485
ENERGY (eV)

FIG.2g

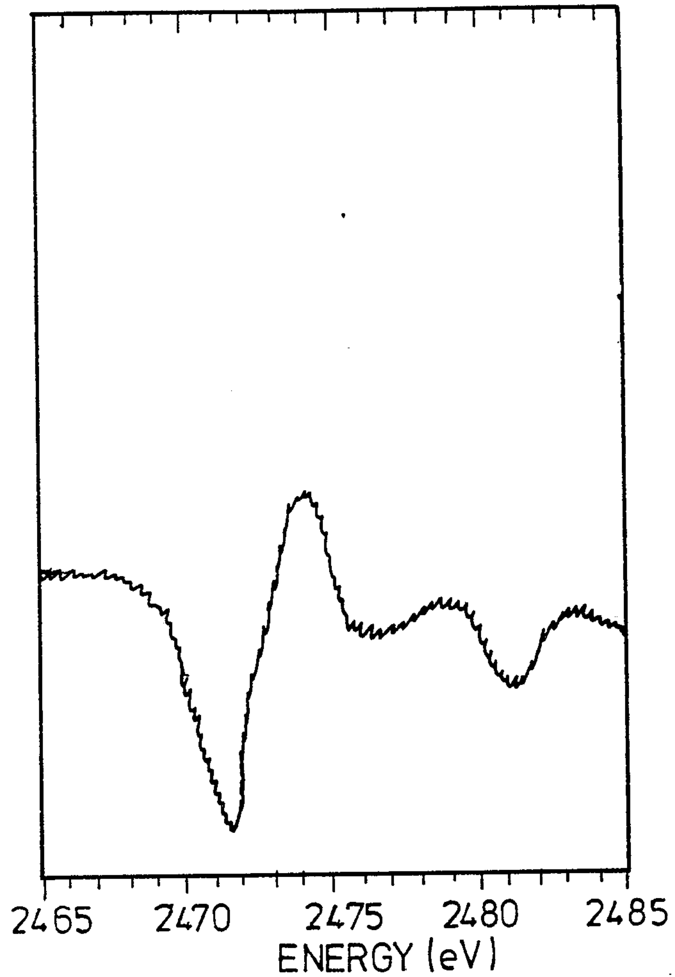
2465
2470
2475
2480
2485
ENERGY (eV)

FIG.2h

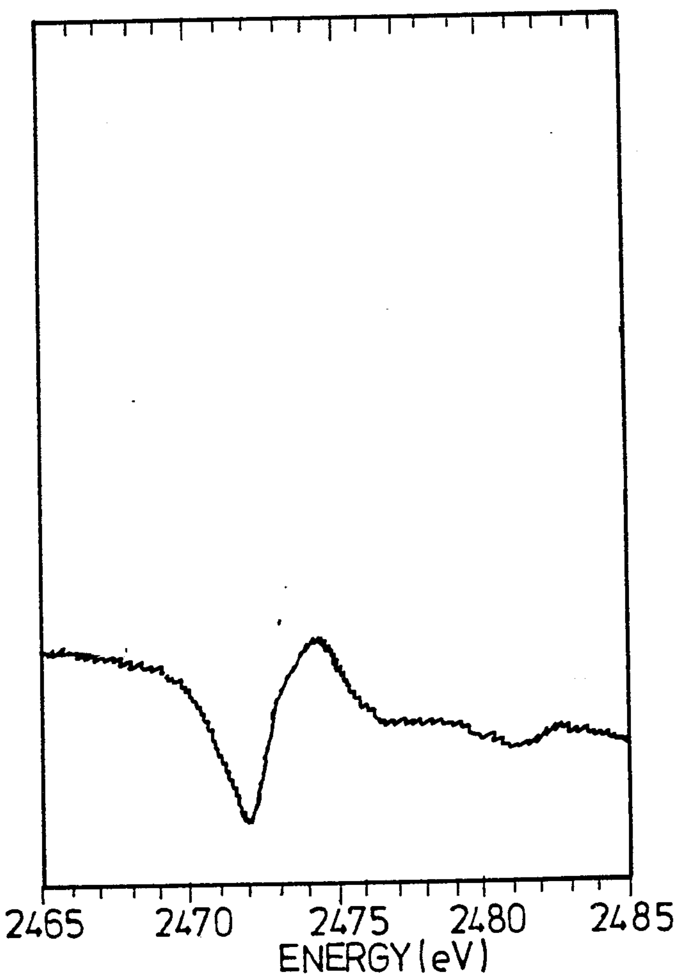
2465
2470
2475
2480
2485
ENERGY (eV)

FIG. 2i